# EUROPEAN PATENT SPECIFICATION

(11) **EP 3 818 256 B1**
(45) Date of publication and mention of the grant of the patent: **07.09.2022**
(21) Application number: 19739876.1
(22) Date of filing: 04.07.2019
(51) Int. Cl.: F01M 1/16, F16N 7/38, F16N 13/04, F16N 13/16, F16N 29/02, F01M 1/02, F01M 1/08

(54) **A METHOD FOR UPGRADING A LUBRICATION SYSTEM IN A LARGE SLOW-RUNNING TWO-STROKE ENGINE**
VERFAHREN ZUM NACHRÜSTEN EINES SCHMIERSYSTEMS IN EINEM GROSSEN, LANGSAM LAUFENDEN ZWEITAKTMOTOR
PROCÉDÉ DE MISE À NIVEAU D'UN SYSTÈME DE LUBRIFICATION DANS UN GROS MOTEUR À DEUX TEMPS LENT

(30) Priority: 06.07.2018 DK PA201870473
(43) Date of publication of application: 12.05.2021
(73) Proprietor: Hans Jensen Lubricators A/S, 9560 Hadsund (DK)
(72) Inventor: BAK, Peer, 9300 Sæby (DK); KRISTENSEN, Nikolaj, 9000 Aalborg (DK)
(74) Representative: Patrade A/S
(86) International application number: PCT/DK2019/050219
(87) International publication number: WO 2020/007434

(56) References cited:
- EP-A1- 2 395 208
- WO-A1-00/28194
- DE-A1- 19 959 309
- JP-A- H0 267 410
- JP-B2- H 073 169
- KR-A- 20180 020 106

## Description

### FIELD OF THE INVENTION

The present invention relates to a method for optimizing lubrication in a large slow-running two-stroke engine. Options are presented for modifying an existing lubrication system, especially for more frequent injection and lower lubricant volume per injection. For example, the large slow-running two-stroke engine is a marine engine or a large engine in power plants. The invention also relates to an upgraded lubrication system.

### BACKGROUND OF THE INVENTION

Due to the focus of on environmental protection, efforts are on-going with respect reduction of emissions from marine engines. This also involves the steady optimization of lubrication systems for such engines, especially due to increased competition. One of the economic aspects with increased attention is a reduction of oil consumption, not only because of environmental protection but also because this is a significant part of the operational costs of ships. A further concern is proper lubrication despite reduced lubricant volume because the longevity of diesel engines should not be compromised by the reduction of oil consumption. Thus, there is a need for steady improvements with respect to lubrication.

For lubricating of large slow-running two-stroke marine diesel engines, several different systems exist, including injection of lubrication oil directly onto the cylinder liner or injection of oil quills to the piston rings.

An alternative and relatively new lubrication method, compared to traditional lubrication, is commercially called Swirl Injection Principle (SIP). It is based on injection of atomized droplets of lubricant into the scavenging air swirl inside the cylinder. The helically upwards directed swirl results in the lubricant being pulled towards the Top Dead Centre (TDC) of the cylinder and pressed outwards against the cylinder wall as a thin and even layer. This is explained in detail in international patent applications WO2010/149162 and WO2016/173601. Examples of SIP lubricant injector systems in marine engines are disclosed in international patent applications WO2002/35068, WO2004/038189, WO2005/124112, WO2010/149162, WO2012/126480, WO2012/126473, WO2014/048438, and WO2016/173601. The injectors comprise an injector housing inside of which a reciprocating valve member is provided, typically a valve needle. The valve member, for example with a needle tip, closes and opens the lubricant's access to a nozzle aperture according to a precise timing. In current SIP systems, a mist of lubricant with atomized droplets is achieved at a pressure of, typically, 35-65 bar, which is substantially higher than the oil pressure of less than 10 bar that are used for systems working with compact oil jets that are introduced into the cylinder. In some types of SIP valves, the high pressure of the lubricant is also used to move a spring-loaded valve member against the spring force away from the nozzle aperture such that the highly pressurised oil is released therefrom as atomized droplets. The ejection of oil leads to a lowering of the pressure of the oil on the valve member, resulting in the valve member returning to its origin and remaining there until the next lubricant cycle where highly pressurized lubricant is supplied to the lubricant injector again.

In such large marine engines, a number of injectors are arranged in a circle around the cylinder, and each injector comprises one or more nozzle apertures at the tip for delivering lubricant jets or sprays or mist of lubricant with atomized droplets into the cylinder from each injector.

One of the currently more traditional approaches for lubrication of marine engines is disclosed in German patent document DE19743955B4 and equivalent Danish patent DK173288B1. It discloses a lubrication system in which a central controller feeds lubricant to a lubricator for each cylinder of the marine engine. The lubricator distributes lubricant to a plurality of lubricant injectors distributed around the circumference of the cylinder. The lubricator comprises a housing in which a plurality of piston pumps are arranged around a circle and driven simultaneously in common by a hydraulic driven actuator piston. Each of the piston pumps comprises an injection plunger that is pumping lubricant through a non-return valve to one of the injectors of a single cylinder. The hydraulic driven actuator piston is moving over an adjustable distance between its stationary rearward end stop and a forward end stop that is adjustable by an adjusting screw. For turning the adjusting screw, it is accessible at an end cap that covers a flange of the housing, through which the adjusting screw extends.

In connection with injection of compact jets of lubricant into marine engine cylinders and also for lubricant quills onto the piston between the piston rings, this system has gained widespread distribution and is marketed under the trade name Alpha lubricator by the company MAN B&W Diesel and Turbo.

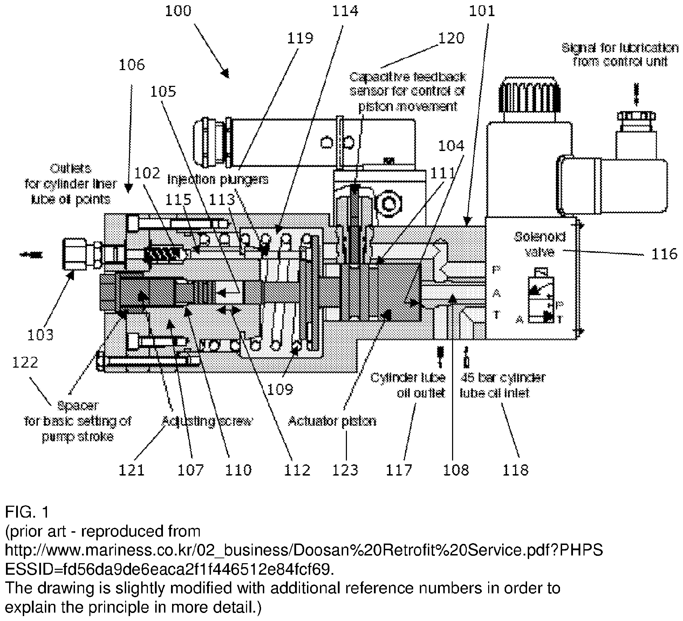

FIG. 1 illustrates an example of an Alpha lubricator as it is found on the Internet page http://www.mariness.co.kr/02_business/Doosan%20Retrofit%20Service.pdf?PHPSES SID=fd56da9de6eaca2flf446512e84fcf69. The drawing is slightly modified with additional reference numbers in order to explain the principle in more detail.

Similar to the above mentioned DE19743955B4 and DK173288B1, the Alpha lubricator 100 comprises a housing 101 in which a plurality of injection plungers 119 are arranged one a circle and driven simultaneously in common by a hydraulic driven actuator piston 123. Each injection plunger 119 is arranged slidingly in a dosing channel 115 receiving lubricant from an internal volume 114 of the housing 101 through an inlet aperture 113. The inlet aperture 113 is closed by the injection plunger 119 during forward motion of the injection plunger 119 so that further forward motion by the injection plunger 119 pressurizes the received lubricant in the remaining part of the dosing channel 115 and pumps it through a non-return valve 102 into a pipe 103 and to one of the injectors of a single cylinder. During retraction of the actuator piston 123, caused by the pre-stressed spring 109, the injection plunger 119 is retracted, and vacuum created in the dosing channel 115, until the forward end of the injection plunger 119 is retracted past the inlet aperture 113 and lubricant can flow through the inlet aperture 113 and refill the dosing channel 115.

The volume of lubricant pressurized by the injection plunger 119 in the dosing channel 115 and expelled through the non-return valve 102 is defined by the travel distance of the injection plunger 119 from the inlet aperture 113 to the most forward position before retraction. During the movement of the actuator piston 123 over the stroke length, the first part of the movement of the injection plunger 119 past the inlet aperture 113, and only once the injection plunger 119 has moved past the inlet aperture 113 and closed it, the lubricant is pressurised and expelled from the remaining dosing channel distance.

The hydraulic driven actuator piston 123 is moving over an adjustable distance between its stationary rearward end stop 104 and a forward end stop 105 that is adjustable by an adjusting screw. For turning the adjusting screw 121, it is accessible at an end cap 106 that covers a flange 107 of the housing 101, through which the adjusting screw 121 extends. The flange 107 in the Alpha lubricator 100 supports the spacer 122 and contains a threading 110 for adjustment of the adjusting screw 121. The reciprocal actuator piston 123 is driven by oscillating oil pressure in the volume 108 behind the actuator piston 123, where a solenoid valve 116 shifts between two pressure levels in this volume 108 behind the actuator piston 123. Once, the lower pressure level is reached, a spring 109 load presses the actuator piston 123 back to the rear end stop. The solenoid valve 116 is regulated by corresponding signals from a control unit.

As can be seen in FIG. 1, a spacer 122 for basic settings of the pump stroke is provided in the 107 flange behind the end cap 106, at which the head of the adjusting screw 121 is accessible for adjustment by rotation. Accordingly, there are two adjustment features, namely a basic adjustment feature by the spacer 122 and the adjustment by the adjusting screw 121. For the spacer variation, the basis setting is delimited by the length of the threading 110 that holds the adjusting screw 121 and in which the adjusting screw 121 is rotated for adjustment. The length of the threading 110 is much less than the spacer illustrated in FIG. 1.

However, as explained in the following, another feature delimits a possible reduction of the stroke length 112 of the actuator piston 123.

In this marketed product, the Alpha lubrication system is modified as compared to the above mentioned patents DE19743955B4 and DK173288B1 in that a capacitive feedback sensor 120 is used to verify a sufficiently long stroke length of the hydraulic actuator.

This feedback sensor 120 is also illustrated in FIG 1. As illustrated, the hydraulic actuator piston 123 comprises two circumferential grooves 111, and the feedback sensor 120 gives a confirmation signal of proper lubrication to the central controller if the stroke of the hydraulic actuator piston is long enough for the second groove to move pass the feedback sensor. When the first and second grooves 111 pass by the feedback sensor 120, the feedback sensor 120 creates a double-pulsed signal which the central controller takes as confirmation of proper lubrication. If only one the first groove 111 passes by the feedback sensor 120, the corresponding single-pulsed signal from the feedback sensor 120 indicates to the central controller general functioning of the feedback sensor 120 and movement of the actuator piston 123 over at least a small distance but not sufficient movement of the actuator piston 123 for proper lubrication. If the feedback sensor 120 is giving any signal, a warning message is provided by the controller that the stroke was not measured as long enough for proper lubrication.

Although, the forward end stop 105 for the hydraulic actuator piston 123 is adjustable by the adjusting screw 121 and potentially further adjustable by the spacer 122, the minimum stroke length of the hydraulic actuator piston 123 must still be sufficiently long for the second groove 111 to move past the feedback sensor 120, as otherwise the controller is caused to register insufficient lubrication.

The amount for injection by the Alpha lubricator is determined by the frequency for injection into the engine. In practice, lubricant injection by the Alpha lubricator is not performed for each revolution of the engine but typically only for each fixed number of revolutions, for example one injection for each 10 or 12 revolutions of the engine.

In some research projects, indications have been found that more frequent injection than one injection for each 10 or 12 engine revolutions leads to a better lubrication result for the marine engine and reduces wear in the engine cylinder. The higher injection frequency requires lower dosages per injection in order not to increase the total lubricant consumption. Documentary reference is made to the Paper No. 283 by Jensen et al. published at the CIMAC congress in Finland June 6-10, 2016 "Lubtronic SIP promise remarkably low wear rates with low CLO consumption"

However, when considering a possible change of the Alpha system to more frequent lubrication, this implies difficulties in that the stroke length of the actuator piston 123 cannot be reduced below the minimum stroke length as determined by the cooperation of the feedback sensor 120 with the grooves 111 in the actuator piston 123 in the Alpha lubricator 100, as already discussed above. The minimum stroke length as determined by the feedback sensor 120 is not easily reduced, as the signal is provided by fixed grooves groove 111 in the metallic actuator piston 123. Accordingly, such change of the Alpha lubricator 100 to lubrication with higher frequency is a complex task.

This problem is of general nature and applies equally well when modifying an Alpha system to an extent that it is specifically suitable as lubricator for SIP injection.

In this connection, it is put forward that the market has an increasing demand for SIP injection system due to its advantages for proper lubrication at low lubricant consumption. However, in some instances, there is a request for not exchanging the entire lubrication system of the engine but only those parts that are necessary to exchange in order to achieve the desired effect. This is not only a matter of costs but also based on interest to keep those modules of the system that appear to function well. Especially, there is a general demand to change the compact jet injection to SIP injection with a mist of lubricant.

In those cases where Alpha lubricators have been used for compact jet injection, and SIP injectors are mounted as a substitution for compact jet injectors, further modifications are necessary, as the SIP injectors are desired with a higher injection frequency than used for compact jet injection using Alpha lubricators. For example, a SIP injection is done for every revolution or even with more than one injection per revolution. However, as mentioned above, such upgrade appears to be a major task due to the feedback sensor.

EP2395208A1 discloses a modification of a lubrication system in which a lubricator with a hydraulically driven actuator piston which moves a number of injection plungers that pressurize lubricant for injection by a similar number of injectors. In the modification, the injection plungers are all connected to a single supply line to the injectors, however with individual valves in between the injectors and the single supply line. In this way, the timing and time length for the injection can be individually adjusted.

Although, this improves the lubrication with respect to timing and time length of the injection, it is dependent on the time when the lubricator pressurizes the lubricant by advancing the actuator piston. For this reason, this system is only useful for reducing the amount of lubricant relatively to the normal function of the lubricator, but it is not entirely independent of the lubricator frequency and timing. It would be desirable to improve the system towards a higher degree of independence for the lubrication injection timing and time length.

Accordingly, it would be desirable to find a proper upgrade procedure.

### DESCRIPTION / SUMMARY OF THE INVENTION

It is an objective of the invention to provide an improvement in the art. A particular objective is to provide a method for upgrade of a lubrication system for a large slow-running two-stroke engine, in particular an Alpha lubrication system. It is a further objective to provide a lubrication system suitable for SIP injection. This objective is achieved by a method of improving the lubrication of a large slow running engine. It is in particular achieved by a method for modifying a lubrication system as explained in more detail in the following.

The lubrication system provides lubricant to injectors for lubricating the cylinder or cylinders in a large slow-running two-stroke engine engine, for example a marine engine or a large engine in power plants. Typically, the engine is burning diesel or gas fuel. The engine comprises one or more cylinders, each with a reciprocal piston inside and with a plurality of lubricant injectors distributed along a perimeter of the cylinder for injection of lubricant into the cylinder at various positions on the perimeter during injection phases.

The lubrication system comprises a lubricator that is pipe-connected to each injector by a corresponding lubricant feed conduit for providing pressurized lubricant to each injector though the corresponding lubricant feed conduit during the injection phases.

The lubricator is of the type that comprises a housing in which a hydraulic-driven actuator piston is arranged reciprocal with a stroke length along a stroke direction. The lubricator further comprises a stroke length adjustment mechanism configured for variably adjusting the stroke length of the reciprocal hydraulic-driven actuator piston between a minimum stroke length and a maximum stroke length.

The lubricator further comprises a plurality of injection plungers slidingly arranged in corresponding dosing cylinders, wherein the injection plungers are coupled to the actuator piston in order to be moved by the actuator piston and for pressurizing lubricant in the dosing cylinders during this movement. When the actuator piston is moved over the stroke length, the injector plungers are moved over a corresponding length. The movement the injection plungers inside the dosing channel pressurizes the lubricant in the dosing channel while the injection plungers move over a dosing channel distance, where the dosing channel distance defines the volume of lubricant expelled from the dosing channel during the injection phase through a non-return valve and through the feed conduit to the injector for injection of the lubricant into the engine cylinder.

As will be apparent below, the dosing channel distance is equal to or less than the stroke length. This depends on the configuration as also discussed above.

The dosing channel distance is adjustable between a minimum dosing channel distance and a maximum dosing channel distance corresponding to the actuator piston's variable stroke length between the minimum stroke length and the maximum stroke length. By reducing the stroke length of the actuator piston, also the dosing channel distance is reduced and the expelled lubricant volume correspondingly.

The lubricator also comprises an electrical valve arranged for causing switch between hydraulic pressure levels that are acting on the actuator piston in order to hydraulically drive the actuator piston reciprocally by the switching pressure levels. Typically, the actuator piston is pre-stressed against the rear end stop by a helical spring.

In some concrete embodiments, the lubricator receives high pressure oil for driving the actuator piston, and the electrical valve switches between
a) access of the pressurized oil to the actuator piston in the injection phase and
b) connection between the actuator piston and a drain for drainage of oil from the actuator piston between injection phases.

The lubrication system further comprises a controller electrically connected to the electrical valve for controlling the timing of the switching for the injection phases by corresponding electrical signals transmitted from the controller to the electrical valve.

According to the above objective, the lubrication system is modified after a certain time of normal operation of the engine.

In more detail, the method comprises
- operating the engine with lubrication from the lubricator under control of the controller with one injection through the lubricant injectors for each first number of engine revolutions;
- stopping the operation of the engine for modification of the lubrication system;
- modifying the lubrication system;
- continuing operation of the engine with the modified lubrication system.

The modification of the lubrication system comprises
- providing a lubricant accumulator for accumulating pressurized lubricant in the lubricant accumulator, an upgrade valve system for controlled flow of lubricant through the upgrade valve system, and an upgrade controller for controlling opening and closing of the upgrade valve system,
- decoupling the lubricant feed conduits between the lubricator and the injectors and instead pipe connecting the lubricator with a single supply line to an upstream side of the upgrade valve system,
- pipe connecting the lubricant accumulator to the upstream side of the upgrade valve system for use as a buffer for the lubricant from the lubricator;
- functionally connecting the upgrade controller to the upgrade valve system for controlling the timing, frequency, and time length, for the opening and closing of the upgrade valve system.

The modified lubrication system is configured for causing the lubricator to pump pressurized lubricant into the accumulator and to the upgrade valve system, by the upgrade controller controlling the upgrade valve system with respect to timing and frequency as well as time length of the lubricant flow for injecting the lubricant by the injectors into the engine cylinder under the control of the upgrade controller.

Correspondingly, the operation of the engine with the modified lubrication system comprises causing the lubricator to pump pressurized lubricant into the accumulator and to the upgrade valve system, by the upgrade controller controlling the upgrade valve system with respect to timing and frequency as well as time length of the lubricant flow for injecting the lubricant by the injectors into the engine cylinder under the control of the upgrade controller.

Advantageously, the method comprises substituting the multiple lubricant feed conduits for the injectors of an engine cylinder by a single common lubricant feed line for all of the injectors of a cylinder or at least for a group of injectors of the single cylinder. This principle, also called "common rail" principle, simplifies the injection arrangement in that all injectors are fed simultaneously by the same line.

In some embodiments, the upgrade valve system is then feeding lubricant from the upgrade valve system to the group of injectors or all injectors of a single engine cylinder only through the common lubricant feed line.

For example, the improvement comprises connecting the injectors to a downstream side of the upgrade valve system for causing flow of lubricant from the lubricator to the group of injectors only through the upgrade valve system and subsequently through the single common lubricant feed line. By increasing pressure in the common lubricant feed line (during injection phases, but not between the injection phases, pressurised lubricant is fed simultaneously to all injectors in the group of injectors through the common lubricant feed line in the injection phases.

Alternatively, the improvement comprises providing each injector in the group of injectors with an internal electrically activated valve as part of the upgrade valve system and connecting the group of injectors to the common lubricant feed line. In this case, pressurized lubricant in the common lubricant feed line is used for feeding the valve inside the injectors, the valve of each of the injectors is operated under control of the upgrade controller.

In some practical embodiments, the method comprises electronically connecting the controller to the upgrade controller and by the upgrade controller receiving timing signals from the controller. The upgrade controller uses these timing signals for providing corresponding upgraded activation signals for activating the upgrade valve system in predetermined time dependence with the timing signals.

The upgrade activation signals are created in time dependence with the timing signal from the controller but not necessarily simultaneously. The upgrade activation signals from the upgrade controller to the injectors can be time shifted relatively to the timing signals from the controller to the upgrade controller. Typically, also, several upgrade activation signals are provided for each timing signal in order to increase the injection frequency.

In particular, the modification of the lubrication system comprises pipe connecting the lubricant accumulator to the single supply line at an upstream side of the upgrade valve system in the flow path between the lubricator and the upgrade valve system for use as a buffer for the lubricant from the lubricator and for taking up pressure variations in the single supply line from the pumping action of the lubricator.

In some embodiments, the lubricant accumulator functions as a large enough buffer to provide sufficient pressure and volume of lubricant to the upgrade valve system such that injection by the injectors can be done solely by lubricant from the lubricant accumulator and independent from the pumping action of the lubricator. Especially, in such case, there is no need for synchronization between the upgrade activation signals from the upgrade controller and the timing signals from the controller, but there is typically a time dependence, as the timing from the controller may still serve for finding a correct timing for the upgrade valve system.

In some embodiments, the method comprises electronically causing the lubricator to increase the stroke length and/or the frequency of the actuator piston of the lubricator for providing sufficient lubricant volume to also maintain the lubricant in the accumulator pressurized. For example, a motor is provided for rotating the adjusting screw. This motor is then electronically activated for rotating the adjustment screw selectively in one or the other direction. This activation is caused by signals from the upgrade controller either directly or via the controller.

Optionally, the method comprises electronically connecting the upgrade controller to the controller for by signals from the upgrade controller causing the controller to increase stroke length and/or frequency of the lubricator for providing sufficient lubricant volume to also maintain the lubricant in the accumulator pressurized. This function can be also used in case that the lubricator is functioning as an independent pump for feeding lubricant into the lubricant accumulator.

In some embodiments, the method comprises electronically connecting the upgrade controller to the controller and by signals from the upgrade controller causing the controller to increase frequency of the lubricator and increase the frequency of the upgrade valve system and injecting lubricant at higher injection frequency with one injection phase for each second number of engine revolutions, wherein the second number is smaller than the first number. For example, the first number is at least 4, optionally 4-16 revolutions, and the second number is smaller than 4, for example 1-3 revolutions or even less than unity, such as 0.5, corresponding to two injections per revolution.

It is important to notice that the insertion of an upgrade valve system and lubricant accumulator between the lubricator and the injectors allows a more frequent injection and with an injection volume per injection smaller than for the injection at lower frequency prior to the upgrade. Also, the injection volume per injection can be made smaller than possible with the adjusting screw of the lubricator. This is at least partly due to the fact that the accumulator functions as a buffer that can take up some of the surplus volume that is pumped by the lubricator when this volume is larger than needed for the more frequent injection. Accordingly, no modification of the lubricator is needed despite lower injection volume per stroke than possible with the lubricator's adjusting screw, which makes the upgrade universal.

In some embodiments, the single supply line from the controller is connected to a drain line through a safety pressure valve such that a drain of surplus lubricant from the lubricator can be drained from the single supply line, which protects the upgraded lubrication system from pressure overload and which also allows the injection volume per injection at higher frequency being made smaller than possible with the adjusting screw of the lubricator.

In other embodiments, no such drain line is provided. A possible alternative includes injectors that are provided with a drain line.

The increased injection frequency improves the lubrication effect and reduces wear of the engine. Documentary reference is made to the Paper No. 283 by Jensen et al. published at the CIMAC congress in Finland June 6-10, 2016 "Lubtronic SIP promise remarkably low wear rates with low CLO consumption" Further reference to the SIP injection is found in the publication "SWIRL INJECTION LUBRICATION - A NEW TECHNOLOGY TO OBTAIN LOW CYLINDER OIL CONSUMPTION WITHOUT SACRIFICING WEAR RATES" by Lauritsen et al, published at the 2001 CIMAC Congress in Hamburg.

Advantageously, the total lubricant consumption in the continued operation of the engine with the modified lubricator is not larger than the lubricant consumption prior to modifying the lubrication system. If the higher frequency for injection does not compromise the aim for minimal oil consumption, the overall result is a better lubrication without increasing the environmental aspects of low consumption of lubricant.

For example, the upgrade valve system is optionally provided as a single unit for all engine cylinders or as a plurality of units with one unit for each engine cylinder.

For clarification, it is pointed out that the term "injector" is used for an injection valve system comprising an injector housing having a lubricant inlet port, flow-connected to the lubricant feed conduit for receiving lubricant from it for injection into the cylinder. The injector further comprises one single injection nozzle with a nozzle aperture as a lubricant outlet that extends into the cylinder for injecting lubricant from the inlet port into the cylinder in the injection phase. Although, the injector has a single nozzle that extends into the cylinder through the cylinder wall, when the injector is properly mounted, the nozzle itself, optionally, has more than a single aperture. For example, nozzles with multiple apertures are disclosed in WO2012/126480.

The term "injection phase" is used for the time during which lubricant is injected into the cylinder by an injector. The term "idle phase" is used for the time between injection phases. The term "injection-cycle" is used for the time it takes to start an injection sequence and until the next injection sequence starts. For example, the injection sequence comprises a single injection, in which case the injection-cycle is measured from the start of the injection phase to the start of the next injection phase. The term "timing" of the injection is used for the adjustment of the start of the injection phase by the injector relatively to a specific position of the piston inside the cylinder. The term "frequency" of the injection is used for the number of repeated injections by an injector per revolution of the engine. If the frequency is unity, there is one injection per revolution. If the frequency is 1/10, there is one injection per every 10 revolutions. This terminology is in line with the above mentioned prior art.

For example, each of the injectors comprises an outlet-valve system at the nozzle configured for opening for flow of lubricant to the nozzle aperture during an injection phase upon pressure rise above a predetermined limit at the outlet-valve system and for closing the outlet-valve system after the injection phase. The outlet-valve system closes off for back-pressure from the cylinder and also prevents lubricant to enter the cylinder unless the outlet-valve is open.

For example, the outlet-valve system comprises an outlet non-return valve. In the outlet non-return valve, the outlet-valve member, for example a ball, ellipsoid, plate, or cylinder, is pre-stressed against an outlet-valve seat by an outlet-valve spring. Upon provision of pressurised lubricant in a flow chamber upstream of the outlet-valve system, the pre-stressed force of the spring is counteracted by the lubricant pressure, and if the pressure is higher than the spring force, the outlet-valve member is displaced from its outlet-valve seat, and the outlet non-return valve opens for injection of lubricant through the nozzle aperture into the cylinder. For example, the outlet-valve spring acts on the valve member in a direction away from the nozzle aperture, although, an opposite movement is also possible.

As mentioned, optionally, a valve system is integrated in the injector housing. Such valve is in functional connection with the upgrade controller, for example electronically connected.

Optionally, SIP injectors are used. SIP injectors are configured to provide a mist of lubricant into the scavenging air of the cylinders. A mist of atomized droplets, also called mist of oil, is important in SIP lubrication, where mist of lubricant is repeatedly injected by the injectors into the scavenging air inside the cylinder prior to the piston passing the injectors in its movement towards the TDC. In the scavenging air, the atomized droplets are diffused and distributed onto the cylinder wall, as they are transported in a direction towards the TDC due to a swirling motion of the scavenging air towards the TDC.

Examples of such injectors for SIP injection are disclosed in WO2012/126473. Additional options for SIP injectors with electrical valves are found in Danish patent applications DK2017 70936 and DK2017 70940.

For example, the injectors comprise a nozzle with a nozzle aperture of between 0.1 and 1 mm, for example between 0.2 and 0.5mm, and are configured for ejecting atomized droplets in the mist of lubricant.

The atomization of the lubricant is due to highly pressurized lubricant in the lubricant injector at the nozzle. The pressure is higher than 10 bar, typically between 20 bar and 120 bar for this high pressure injection. An example is an interval of between 30 and 80 bar, optionally between 35 and 60 bar. The injection time is short, typically in the order of 5-30 milliseconds (msec). However, the injection time can be adjusted to 1 msec or even less than 1 msec, for example down to 0.1 msec.

Also, the viscosity influences the atomization. Lubricants used in marine engines, typically, have a typical kinematic viscosity of about 220 cSt at 40°C and 20 cSt at 100°C, which translates into a dynamic viscosity of between 202 and 37 mPa·s. An example of a useful lubricant is the high performance, marine diesel engine cylinder oil ExxonMobil^{®} Mobilgard^{™} 560VS. Other lubricants useful for marine engines are other Mobilgard^{™} oils as well as Castrol^{®} Cyltech oils. Commonly used lubricants for marine engines have largely identical viscosity profiles in the range of 40-100°C and are all useful for atomization, for example when having a nozzle aperture diameter of 0.1-0.8 mm, and the lubricant has a pressure of 30-80 bar at the aperture and a temperature in the region of 30-100°C or 40-100°C. See also, the published article on this subject by Rathesan Ravendran, Peter Jensen, Jesper de Claville Christiansen, Benny Endelt, Erik Appel Jensen, (2017) "Rheological behaviour of lubrication oils used in two-stroke marine engines", Industrial Lubrication and Tribology, Vol. 69 Issue: 5, pp.750-753, https://doi.org/10.1108/ILT-03-2016-0075.

### SHORT DESCRIPTION OF THE DRAWINGS

The invention will be explained in more detail with reference to the drawing, where
FIG. 1 is a reproduction of a drawing of an Alpha controller s published on the Internet site http://www.mariness.co.kr/02_business/Doosan%20Retrofit%20Service.pdf? PHPSESSID=fd56da9de6eaca2f1f446512e84fcf69
FIG. 2 is a sketch of part of a cylinder in an engine prior to modification;
FIG. 3 is a sketch of part of a cylinder in an engine after modification;
FIG. 4 illustrates a modified lubrication system in detail;
FIG. 5 illustrates the electronic connection between the components;
FIG. 6 illustrates an alternative embodiment.

### DETAILED DESCRIPTION / PREFERRED EMBODIMENT

FIG. 1 is a reproduction of a drawing of an Alpha controller s published on the Internet site http://www.mariness.co.kr/02_business/Doosan%20Retrofit%20Service.pdf?PHPSES SID=fd56da9de6eaca2f1f446512e84fcf69.

For the method as described herein, this drawing of the Alpha lubricator in FIG. 1 serves as example for a concrete embodiment of a lubricator that is modified, although slight variations of the lubricator are possible without departing from the basic principles of an actuator piston driving the plurality of injection plungers for injection. Accordingly, the explanation as given in the introduction applies for the explanation of the modification of the lubricant system equally well.

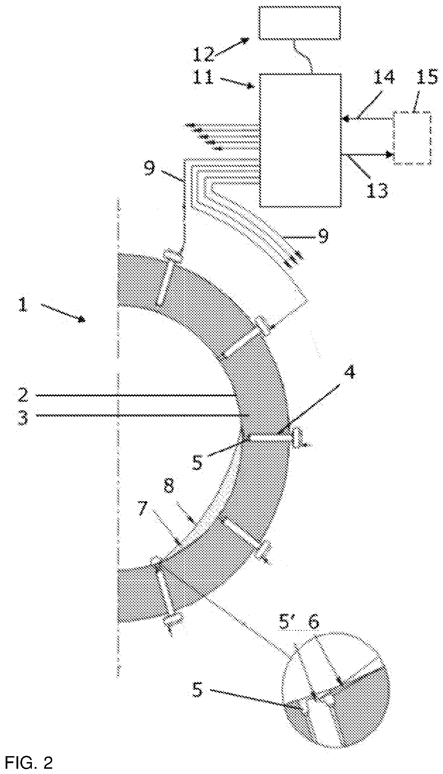

FIG. 2 illustrates a sketch of part of a cylinder in a large slow-running two-stroke engine and a lubrication system prior to modification, for example in a marine diesel engine. The cylinder 1 comprises a cylinder liner 2 on the inner side of the cylinder wall 3. Inside the cylinder wall 3, there are provided a plurality of injectors 4 for injection of lubricant into the cylinder 1.

As illustrated, the injectors 4 are distributed along a circle with the same angular distance between adjacent injectors 4, although this is not strictly necessary. Also, the arrangement along a circle is not necessary, seeing that an arrangement with axially shifted injectors is also possible, for example every second injector shifted towards the piston's top dead centre (TDC) relatively to a neighbouring injector.

As illustrated, the injectors 4 receive pressurised lubrication oil from a lubricator 11 through lubricant feed conduits 9, one for each injector. It relates in particular to the type of lubricator 100 as initially explained in connection with FIG. 1, for example the Alpha lubricator.

The supplied oil is typically heated to a specific temperature, for example 50-60 degrees.

The lubricator 11 supplies pressurised lubrication oil to the injectors 4 in precisely timed pulses, synchronised with the piston motion in the cylinder 1 of the engine. The injection by the lubricator 11 is controlled by a controller 12. For the synchronisation, the controller 12 monitors parameters for the actual state and motion of the engine, including speed, load, and position of the crankshaft, as the latter reveals the position of the pistons in the cylinders.

Each of the injectors 4 has a nozzle 5 with a nozzle aperture 5' from which lubricant is ejected under high pressure into the cylinder 1, for example in the form of a compact jet or oil quill.

Optionally, the cylinder liner 2 is provided with free outs 6 for providing adequate space for the lubricant 8 in the form of a jet, spray or mist of atomized droplets from the injector 4.

The lubricator 11 is connected to a supply conduit 14 for receiving lubricant from a lubricant supply 15, including an oil pump, and, optionally, a return conduit 13 for return of lubricant, typically to a lubricant reservoir, optionally for recirculation of lubricant. The lubricant pressure in the supply conduit 14 is higher than the pressure in the return conduit 13, for example at least two times higher. The lubricant supply conduit 14 is also used for supplying lubricant for lubrication in addition to driving the actuator piston.

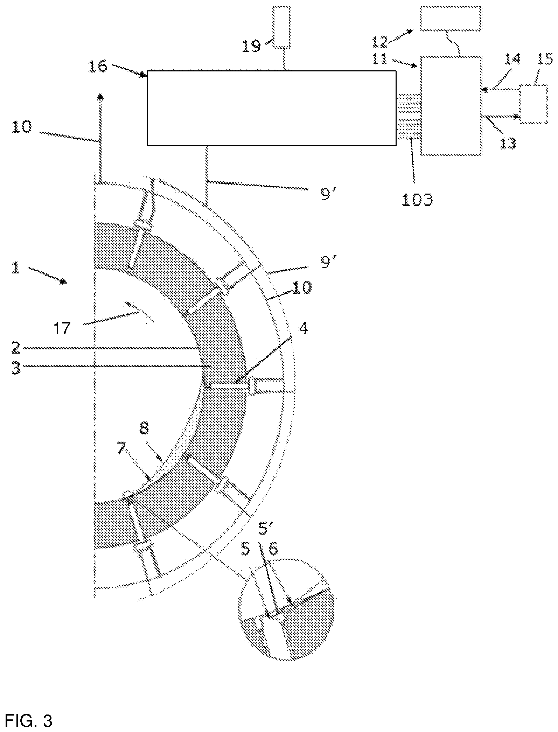

FIG. 3 illustrates a sketch of part of a cylinder in a large slow-running two-stroke engine and a lubrication system after modification in a first embodiment. In this case a modified lubrication system in which an upgrade kit 16 has been added to the original lubrication system as well as an upgrade controller 19 that is controlling the lubrication via the upgrade kit 16.

The upgrade controller 19 is optionally also electronically connected to the original controller 12. Advantages of this option will become clearer in the following

The multiple lubricant feed conduits 9 are substituted by a single common feed line 9'. The pipe connections 103 into which lubricant is pumped by the lubricator 11 are feeding lubricant into the upgrade kit 16, which in turn feeds lubricant to the injectors by a "common rail" system in which all injectors 4 of an engine cylinder, or a subgroup of injectors for a single engine cylinder, are receiving lubricant through the single lubricant feed line 9' in common and simultaneously.

Optionally, there is provided a return line 10 for back flow of lubricant from the injectors 4.

Optionally, for example as an upgrade, the lubricant is ejected as a mist 8 of lubricant with atomized droplets 7 for SIP injection. It is based on injection of atomized droplets of lubricant into the scavenging air swirl 17 inside the cylinder 1. The helically upwards directed swirl 17 results in the lubricant being pulled towards the Top Dead Centre (TDC) of the cylinder 1 and pressed outwards against the cylinder wall 2 as a thin and even layer.

For example for SIP injection, the nozzle aperture has a diameter of between 0.1 and 0.8 mm, such as between 0.2 and 0.5 mm, which at a pressure of 10-120 bar, for example 20 to 120 bar or 20 to 100 bar, optionally 30 to 80 bar or even 50 to 80 bar, or even at higher pressure than 120 bar, atomizes the lubricant into a mist 8 of lubricant, which is in contrast to a compact jet of lubricant. The swirl 17 of the scavenging air in the cylinder 1 transports and presses the mist 8 of lubricant against the cylinder liner 2 such that an even distribution of lubrication oil on the cylinder liner 2 is achieved.

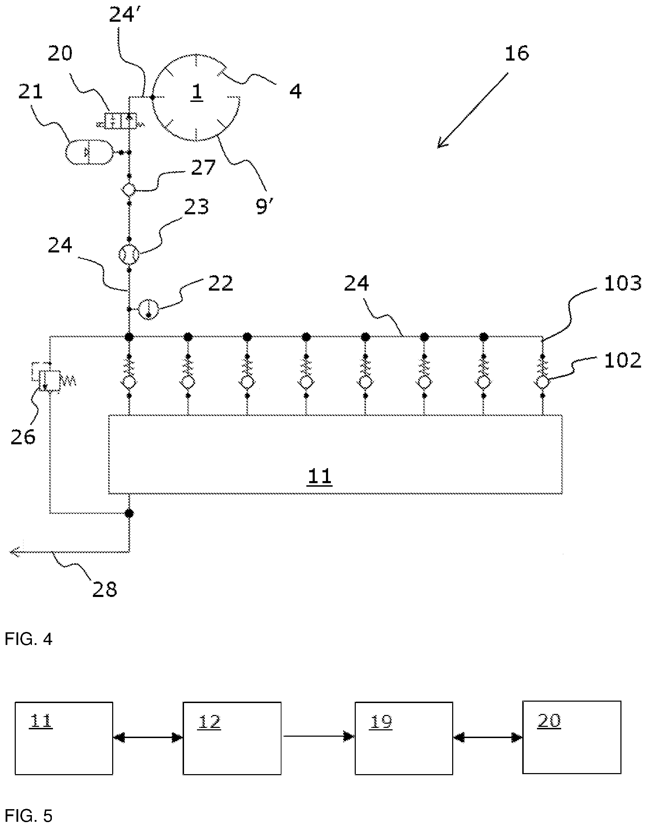

FIG. 4 illustrates an example of an upgraded lubrication system with an upgrade kit 16 and with a lubricator 11 as a pumping system for the upgrade kit 16.

The outlets of the lubricator 11 with the non-return valves 102 and the pipe connections 103 are connected to an upgrade valve system 20 via a single supply line 24. Under control of the upgrade controller 19, the upgrade valve system 20 feeds lubricant to the injectors 4 via the common lubricant feed line 9'.

A lubricant accumulator 21 branches off the supply line 24 upstream of the upgrade valve system 20 for use as a buffer for the pressurized lubricant from the lubricator 100. For increased pressure control and flow control, a pressure meter 22 and a flow meter 23 are added to the system. In order to prevent backflow from the lubricant accumulator 21, a non-return valve 27 is installed in the supply line.

The lubricator 11 is used as a pump to provide lubricant to the injectors 4 through the upgrade valve system 20 and also to fill the lubricant accumulator 21 and keep the lubricant accumulator 21 filled with lubricant at adequate pressure. In order to not only provide sufficient pressurized lubricant for the injectors but also fill the lubricant accumulator, the pumping action of the lubricator 11 creates a surplus of pressurized lubricant into the upgraded kit 16.

As a safety measure for preventing overpressure, a pressure-adjustable return safety valve 26 is connected to the supply line 24 upstream of the upgrade valve system 20. Lubricant drained through the safety pressure valve 26 is recycled through a drain line 28 to the general lubricant supply. The drain line 28 is optional, and the upgraded lubricant system can also be provided and function properly without such drain line, for example in case that the injectors 4 comprise a drain.

With reference to the Alpha lubricator of FIG. 1 in combination with FIG. 4, the following important aspect is observed. The accumulator 21 and the optional drain line 28 make it possible to cause the lubricator to provide it pumping action over the normal stroke length without causes pressure overload or increased injection volume. This is advantageous in that a correct feedback sensor signal to the controller 12 can be maintained, which would not be possible if the stroke length of the actuator piston 123 would have to be reduced due to more frequent injection, for example at twice the frequency, with lower dosage injection, for example half the dosage per injection phase.

In operation of the engine, the modified lubrication system causes the lubricator 11 to pump pressurized lubricant into the accumulator 21 and to the upgrade valve system 20. The upgrade controller 19 is controlling the upgrade valve system 20 with respect to timing and frequency as well as length of the lubricant flow from the upgrade valve system 20 to the injectors 4 for injecting correct portions of lubricant into the engine cylinder in the injection phase.

In order to provide adequate timing for the lubricant injection, it is an advantage to electronically connect the upgrade controller 19 to the controller 12. The upgrade controller 19 is then configured for receiving the same lubricator activation signals from the controller 12 as the lubricator 11 is receiving. These signals can then be used by the upgrade controller 19 for sending injection signals to the upgrade valve system 20.

Although, it is possible to activate the upgrade valve system 20 in synchronization with pumping action of the lubricator 11, this is not necessary, as the lubricant accumulator 21 works as a lubricant buffer and also takes up pressure variations from the pumping action of the lubricator 11.

For example, the controller 12 is caused to increase stroke length and/or frequency of the lubricator 11. This function is useful for filling the lubricant accumulator 21 and keeping it loaded with adequate pressurised lubricant for a subsequent injection.

Optionally, pumping signals are sent, for example from the upgrade controller 19, to the controller 12 causing the controller 12 to increase the pumping action, for example by increased stroke length and/or increased frequency, for providing sufficient lubricant volume to also maintain the lubricant in the lubricant accumulator 21 pressurized. In this case, the upgrade controller 19 overrules the controller's 12 normal function in order to achieve increased pumping action as compared to the pumping action prior to the modification.

Optionally, the lubricator 11 is caused to increase the pumping action by command from the controller 12 after reprogramming of the controller. In this case, the upgrade controller 19 is not sending the pumping signal for increasing the pumping action.

Optionally, the adjusting screw of the lubricator 11 is connected to a motorized drive that drives the screw for stroke adjustment. This screw is potentially controlled and activated by the upgrade controller 19. in this way, the pumping action of the controller can be increased without changing the action of the controller 12.

For example, the lubricant accumulator 21 functions as a large enough buffer to provide sufficient pressure and volume of lubricant to the upgrade valve system 20 such that injection by the injectors 4 can be done solely by lubricant from the lubricant accumulator 21 and independent from the pumping action of the lubricator 11. For example, the lubricator 11 is caused to fill the lubricant accumulator 21 again after each injection phase or after each multiple injection phases.

FIG. 5 illustrates an example of an electronic setup with the controller 12 and the update controller 19. In this embodiment, the lubricator 11 communicates with the controller 12 and receives the activation signals for pumping from the controller 12. The upgrade of the lubrication system includes the upgrade controller 19, which receives timing signals from the controller 12 for the injection, which are then used for the upgrade valve system 20.

As already outlines above, the upgrade controller 19 may be programmed to cause the controller 12 to increase the frequency for injection and/or the stroke length in order to provide lubricant more frequently and at higher volume, especially to fill the lubricant accumulator. However, typically, the increased frequency of the lubricator 11 is achieved by simple reprogramming of the controller 12.

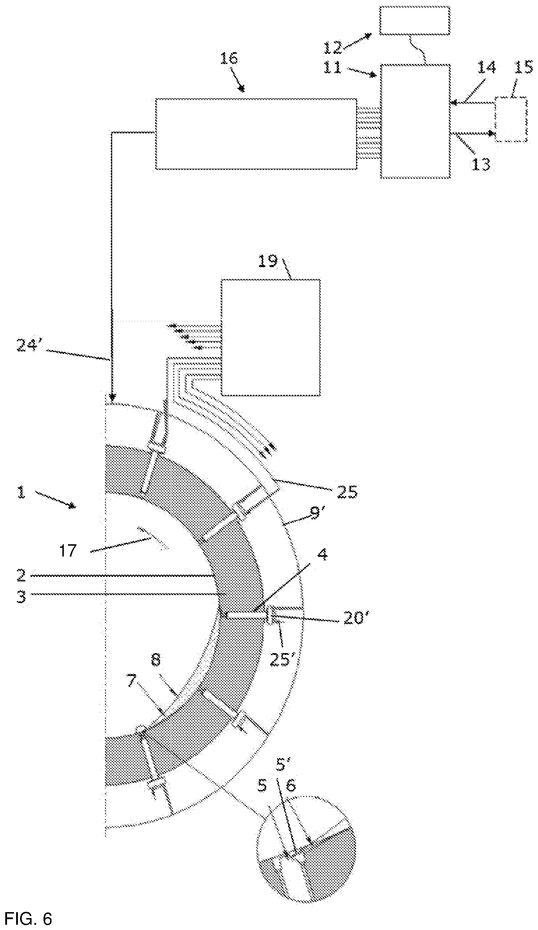

FIG. 6 illustrates an alternative embodiment in which the upgrade valve system 20 of FIG. 4 has been substituted by an upgrade valve system 20' which is integrated in the injectors 4. Each injector 4 has a housing that is mounted on the outer side of the cylinder wall 2, where the housing contains an electronically operated valve, controlled by the upgrade controller 19 and as part of the upgrade valve system 20'.

Examples of such injectors for SIP injection are disclosed in WO2012/126473. Additional options for SIP injectors with electrical valves are found in Danish patent applications DK2017 70936 and DK2017 70940.

The injectors 4 are receiving lubricant from the common single feed line 9', which is connected the end 24' of the single feed line 24, which is illustrated in FIG. 4. However, the common single feed line 9' provides constantly pressurized lubricant to the injectors 4 which due to the integrated upgrade valve system 20' regulate the injection under control of the upgrade controller 19.

In practical embodiments, the injectors 4 are provided with electrical connectors 25' that are electrically communicating with the upgrade controller 19 through electrical cables 25. The upgrade controller 19 sends electrical control signals to each injector 4 for controlling injection of lubricant by the injector 4 through the nozzle 5. As it is illustrated, one cable 25 is provided for each injector 4, which allows individual control of injection by the respective injector 4.

However, it is also possible to provide one electrical cable 25 from the upgrade controller 19 to all injectors 4 such that all injectors 4 are injecting simultaneously upon receiving an electrical control signal through one single electrical cable 25.

Alternatively, it is also possible to provide one electrical cable 25 from the upgrade controller 19 to a subgroup of injectors, for example a subgroup of 2, 3, 4, 5 or 6 injectors, such that a first subgroup is controlled by the upgrade controller 19 through a first cable 25 and a second subgroup is controlled through a second cable 25. The number of cables and subgroups are selective dependent on preferred configurations.

The electrical control signals from the upgrade controller 19 to the injectors 4 are provided in precisely timed pulses, synchronised with the piston motion in the cylinder 1 of the engine. For this purpose, the upgrade controller receives timing signals from the controller, as illustrated in FIG. 5.

Typically, timing and amount of lubricant is dependent on parameters for the actual state and motion of the engine, for example speed, load, and position of the crankshaft, where the latter reveals the position of the pistons in the cylinders.

Optionally, there is provided a return line for back flow of lubricant from the injectors 4, similarly to the return line 10 in FIG. 3.

As it appears from FIG. 4 and 6, the modification is an add-on to an existing system, where the add-on is connected to the downstream side of the lubricator 12, whereas general lubricant supply and the electronic connection to the engine are maintained. For these reasons, the modification is relatively simple, when having an upgrade kit of the type as described above.

Advantages are relatively low cost and labour for modification as well as short down time of the engine, for example marine engine.

## Claims

1. A method of improving the lubrication of a large slow running engine, the engine comprising a cylinder (1) with a reciprocal piston inside and with a plurality of lubricant injectors (4) distributed along a perimeter of the cylinder (1) for injection of lubricant into the cylinder (1) at various positions on the perimeter during injection phases; the engine further comprising a lubrication system for providing lubricant to the injectors in the injection phases;
wherein the lubrication system prior to modification comprises a lubricator (11) pipe-connected to each injector by a corresponding lubricant feed conduit (9) for providing pressurized lubricant to each injector though the corresponding lubricant feed conduit (9) in the injection phases;
wherein the lubricator (11) is of the type that comprises a housing (101) in which a hydraulic-driven actuator piston (123) is arranged reciprocal along a stroke length (112), wherein the lubricator (11) further comprises a stroke length (112) adjustment mechanism configured for variably adjusting the stroke length (112) of the reciprocal hydraulic-driven actuator piston (123) only between a minimum stroke length and a maximum stroke length;
wherein the lubricator (11) further comprises a plurality of injection plungers slidingly arranged in corresponding dosing channels (115), wherein the injection plungers are coupled to the actuator piston (123) in order to be moved by the actuator piston (123) over the stroke length (112) and as a consequence pressurize lubricant in the dosing channels (115) over a dosing channel distance for expelling the pressurized lubricant from the dosing channel through a non-return valve (102) and through the lubricant feed conduit (9) to the injector (4) for injection of the lubricant into the engine cylinder (1); wherein the dosing channel distance defines the volume of lubricant expelled from the dosing channel during the injection phase; wherein the dosing channel distance is adjustable between a minimum dosing channel distance and a maximum dosing channel distance by adjusting the stroke length (112) between the minimum stroke length and the maximum stroke length of the actuator piston (123);
wherein the lubricator (11) comprises an electrical valve (116) arranged for causing switch between hydraulic pressure levels acting on the actuator piston (123) to hydraulically drive the actuator piston (123) reciprocally by the switching pressure levels;
wherein the lubrication system comprises a controller (12) electrically connected to the electrical valve (116) for controlling the timing of the switching for the injection phases by corresponding electrical signals transmitted from the controller (12) to the electrical valve (116);
wherein the improvement by modifying the lubrication system comprises
- providing a lubricant accumulator (21) for accumulating pressurized lubricant in the lubricant accumulator (21), an upgrade valve system (20) for controlled flow of lubricant through the upgrade valve system (20), and an upgrade controller (19) for controlling opening and closing of the upgrade valve system (20),
- decoupling the lubricant feed conduits (9) between the lubricator (11) and the injectors (4) and instead pipe connecting the lubricator (11) with a single supply line (24) to an upstream side of the upgrade valve system (20, 20'),
- functionally connecting the upgrade controller (19) to the upgrade valve system (20, 20') for controlling the timing, frequency, and time length, for the opening and closing of the upgrade valve system (20, 20');
**characterized in that** the method comprises
- operating the engine with lubrication from the lubricator (11) under control of the controller (12) with one injection through the lubricant injectors (4) for each first number of engine revolutions;
- stopping the operation of the engine for modification of the lubrication system;
- modifying the lubrication system;
- continuing operation of the engine with the modified lubrication system;
wherein the modification of the lubrication system comprises pipe connecting the lubricant accumulator (21) to the single supply line (24) at an upstream side of the upgrade valve system (20.20') in the flow path between the lubricator (11) and the upgrade valve system (20, 20') for use as a buffer for the lubricant from the lubricator (11) and for taking up pressure variations in the single supply line (24) from the pumping action of the lubricator (11);
wherein the operation of the engine with the modified lubrication system comprises causing the lubricator (11) to pump pressurized lubricant into the accumulator (21) and to the upgrade valve system (20, 20'), by the upgrade controller (19) controlling the upgrade valve system (20, 20') with respect to timing and frequency as well as time length of the lubricant flow for injecting the lubricant by the injectors (4) into the engine cylinder (1) under the control of the upgrade controller (19).

2. A method according to claim 1, wherein the method comprises substituting the lubricant feed conduits (9) from a group of injectors (4) of a single engine cylinder (1) by a single common lubricant feed line (9') for feeding lubricant simultaneously to all injectors (4) in the group of injectors (4) through the common lubricant feed line (9').

3. A method according to claim 2, wherein the method comprises connecting the injectors (4) to a downstream side of the upgrade valve system (20) for causing flow of lubricant from the lubricator (11) to the group of injectors (4) only through the upgrade valve system (20) and subsequently through the single common lubricant feed line (9'); increasing pressure in the common lubricant feed line (9') during injection phases but not between the injection phases for feeding pressurised lubricant simultaneously to all injectors (4) in the group of injectors (4) through the common lubricant feed line (9') in the injection phases.

4. A method according to claim 2, wherein the method comprises providing each injector (4) in the group of injectors (4) with an internal electrically activated valve as part of the upgrade valve system (20') and connecting the group of injectors (4) to the common lubricant feed line (9'); providing pressurized lubricant in the common lubricant feed line (9') and activating the valves of each of the injectors (4) under control by the upgrade controller (19).

5. A method according to any one of the preceding claims, wherein the method comprises electronically connecting the controller (12) to the upgrade controller (19) and by the upgrade controller receiving timing signals from the controller (12) and sending upgraded activation signals to the upgrade valve system (20, 20) for activating the upgrade valve system (20, 20') in predetermined time dependence with the timing signals.

6. A method according to any one of the preceding claims, wherein the method comprises electronically causing the controller (12) to increase the stroke length and/or the frequency of the actuator piston (123) of the lubricator (11) for providing sufficient lubricant volume to also maintain the lubricant in the accumulator (21) pressurized.

7. A method according to any one of the preceding claims, wherein the method comprises causing the controller (12) to increase pumping frequency of the lubricator (12) and correspondingly increasing the frequency of the upgrade valve system (20) and injecting lubricant at higher injection frequency with one injection phase for each second number of engine revolutions, wherein the second number is smaller than the first number.

8. A method according to any one of the preceding claims, wherein the lubricant injectors prior to modification are of the type that inject oil quills or compact lubricant jets; and wherein the method comprises exchanging the lubricant injectors with a SIP type injectors (4) and continuing operation of the engine with lubricant injection by SIP injectors (4) and injecting a mist of atomized droplets of lubricant into the scavenging air swirl inside the cylinder, wherein the pressure of the lubricant from the SIP injectors is in the interval of 20 to 120 bar.

9. A method of modifying a lubrication system for improving the lubrication of a large slow running engine, wherein the engine is of the type comprising a cylinder (1) with a reciprocal piston inside and with a plurality of lubricant injectors (4) distributed along a perimeter of the cylinder (1) for injection of lubricant into the cylinder (1) at various positions on the perimeter during injection phases; wherein the lubrication system is configured for providing lubricant to the injectors in the injection phases;
wherein the lubrication system prior to modification comprises a lubricator (11) with pipe connections (103) for being pipe-connected to each injector (4) by a corresponding lubricant feed conduit (9) and for providing pressurized lubricant to each injector (4) though the corresponding lubricant feed conduit (9) in the injection phases;
wherein the lubricator (11) is of the type that comprises a housing (101) in which a hydraulic-driven actuator piston (123) is arranged reciprocal along a stroke length (112), wherein the lubricator (11) further comprises a stroke length (112) adjustment mechanism configured for variably adjusting the stroke length (112) of the reciprocal hydraulic-driven actuator piston (123) between a minimum stroke length and a maximum stroke length;
wherein the lubricator further comprises a plurality of injection plungers slidingly arranged in corresponding dosing channels (115), wherein the injection plungers are coupled to the actuator piston (123) in order to be moved by the actuator piston (123) over the stroke length (112) and as a consequence pressurize lubricant in the dosing channels (115) over a dosing channel distance for expelling the pressurized lubricant from the dosing channel through a non-return valve (102) and through the feed conduits (9) to the injectors (4) for injection of the lubricant into the engine cylinder (1); wherein the dosing channel distance defines the volume of lubricant expelled from the dosing channel during the injection phase; wherein the dosing channel distance is adjustable between a minimum dosing channel distance and a maximum dosing channel distance by adjusting the stroke length (112) between the minimum stroke length and the maximum stroke length of the actuator piston (123);
wherein the lubricator (11) comprises an electrical valve (116) arranged for causing switch between hydraulic pressure levels acting on the actuator piston (123) to hydraulically drive the actuator piston (123) reciprocally by the switching pressure levels;
wherein the lubrication system comprises a controller (12) electrically connected to the electrical valve (116) for controlling the timing of the switching for the injection phases by corresponding electrical signals transmitted from the controller to the electrical valve (116);
wherein the modification of the lubrication system comprises
- providing a lubricant accumulator (21) for accumulating pressurized lubricant in the lubricant accumulator (21), an upgrade valve system (20) for controlled flow of lubricant through the upgrade valve system (20), and an upgrade controller (19) for controlling opening and closing of the upgrade valve system (20),
- decoupling the lubricant feed conduits (9) between the lubricator (11) and the injectors (4) and instead pipe connecting the lubricator (11) with a single supply line (24) to an upstream side of the upgrade valve system (20);
- functionally connecting the upgrade controller (19) to the upgrade valve system (20, 20') for controlling the timing, frequency, and time length, for the opening and closing of the upgrade valve system (20, 20');
**characterized in that** the modification of the lubrication system further comprises pipe connecting the lubricant accumulator (21) to the single supply line (24) at an upstream side of the upgrade valve system (20.20') in the flow path between the lubricator (11) and the upgrade valve system (20, 20') for use as a buffer for the lubricant from the lubricator (11) and for taking up pressure variations in the single supply line (24) from the pumping action of the lubricator (11);
wherein modified lubrication system is configured for causing the lubricator (11) to pump pressurized lubricant into the accumulator (21) and to the upgrade valve system (20, 20'), by the upgrade controller (19) controlling the upgrade valve system (20, 20') with respect to timing and frequency as well as time length of the lubricant flow for injecting the lubricant into the engine cylinder (1) under the control of the upgrade controller (19).

10. A method according to claim 9, wherein the method comprises substituting the lubricant feed conduits (9) from a group of injectors (4) of a single engine cylinder (1) by a single common lubricant feed line (9') for feeding lubricant simultaneously to all injectors (4) in the group of injectors (4) through the common lubricant feed line (9').

11. A method according to claim 10, wherein the method comprises connecting the injectors (4) to a downstream side of the upgrade valve system (20) for causing flow of lubricant from the lubricator (11) to the group of injectors (4) only through the upgrade valve system (20) and subsequently through the single common lubricant feed line (9'); increasing pressure in the common lubricant feed line (9') during injection phases but not between the injection phases for feeding pressurised lubricant simultaneously to all injectors (4) in the group of injectors (4) through the common lubricant feed line (9') in the injection phases.

12. A method according to claim 10, wherein the method comprises providing each injector (4) in the group of injectors (4) with an internal electrically activated valve as part of the upgrade valve system (20') and connecting the group of injectors (4) to the common lubricant feed line (9'); providing pressurized lubricant in the common lubricant feed line (9') and activating the valves of each of the injectors (4) under control by the upgrade controller (19).

13. A method according to any one of the claims 9-12, wherein the method comprises electronically connecting the controller (12) to the upgrade controller (19) and by the upgrade controller receiving timing signals from the controller (12) and sending upgraded activation signals to the upgrade valve system (20, 20) for activating the upgrade valve system (20, 20') in predetermined time dependence with the timing signals.

14. A method according to any one of the claims 9-13, wherein the method comprises exchanging the lubricant injectors with a SIP type injectors (4) for continuing operation of the engine with lubricant injection by SIP injectors and injecting a mist of atomized droplets of lubricant into the scavenging air swirl inside the cylinder, wherein the pressure of the lubricant from the SIP injectors is in the interval of 20 to 120 bar.

15. A lubrication system for a large slow running engine which has been modified according to claim 1 or 10, wherein the engine is of the type comprising a cylinder (1) with a reciprocal piston inside and with a plurality of lubricant injectors (4) distributed along a perimeter of the cylinder (1) for injection of lubricant into the cylinder (1) at various positions on the perimeter during injection phases; wherein the lubrication system is configured for providing lubricant to the injectors in the injection phases;
wherein the lubrication system comprises a lubricator (11) with pipe connection to the injectors (4) for providing pressurized lubricant to the injectors (4) in the injection phases;
wherein the lubricator (11) comprises a housing (101) in which a hydraulic-driven actuator piston (123) is arranged reciprocal along a stroke length (112), wherein the lubricator (11) further comprises a stroke length (112) adjustment mechanism configured for variably adjusting the stroke length (112) of the reciprocal hydraulic-driven actuator piston (123) between a minimum stroke length and a maximum stroke length;
wherein the lubricator (11) further comprises a plurality of injection plungers slidingly arranged in corresponding dosing channels (115), wherein the injection plungers are coupled to the actuator piston (123) in order to be moved by the actuator piston (123) over the stroke length (112) and as a consequence pressurize lubricant in the dosing channels (115) over a dosing channel distance for expelling the pressurized lubricant from the dosing channel through a non-return valve (102) and to the injectors (4) for injection of the lubricant into the engine cylinder (1); wherein the dosing channel distance defines the volume of lubricant expelled from the dosing channel during the injection phase; wherein the dosing channel distance is adjustable between a minimum dosing channel distance and a maximum dosing channel distance of a lubricator before modification and which is established by adjusting the stroke length (112) between the minimum stroke length and the maximum stroke length of the actuator piston (123);
wherein the lubricator (11) comprises an electrical valve (116) arranged for causing switch between hydraulic pressure levels acting on the actuator piston (123) to hydraulically drive the actuator piston (123) reciprocally by the switching pressure levels;
wherein the lubrication system comprises a controller (12) electrically connected to the electrical valve (116) for controlling the timing of the switching for the injection phases by corresponding electrical signals transmitted from the controller to the electrical valve (116);
wherein the lubrication system comprises a lubricant accumulator (21) for accumulating pressurized lubricant in the lubricant accumulator (21), an upgrade valve system (20) for controlled flow of lubricant through the upgrade valve system (20), and an upgrade controller (19) for controlling opening and closing of the upgrade valve system (20),
wherein the lubricator (11) is connected with a single supply line (24) to an upstream side of the upgrade valve system (20);
wherein the upgrade controller (19) is functionally connected to the upgrade valve system (20, 20') for controlling the timing, frequency, and time length, for the opening and closing of the upgrade valve system (20, 20');
**characterized in that** the lubricant accumulator (21) is pipe-connected to the single supply line (24) at an upstream side of the upgrade valve system (20.20') in the flow path between the lubricator (11) and the upgrade valve system (20, 20') for use as a buffer for the lubricant from the lubricator (11) and for taking up pressure variations in the single supply line (24) from the pumping action of the lubricator (11);
wherein the lubrication system is configured for causing the lubricator (12) to pump pressurized lubricant into the accumulator (21) and to the upgrade valve system (20, 20'), by the upgrade controller (19) controlling the upgrade valve system (20, 20') with respect to timing and frequency as well as length of the lubricant flow for injecting the lubricant into the engine cylinder (1) under the control of the upgrade controller (19).

## Patentansprüche

1. Verfahren zum Verbessern der Schmierung eines großen, langsam laufenden Motors, wobei der Motor einen Zylinder (1) mit einem hin- und hergehenden Kolben im Inneren und mit einer Vielzahl von Schmiermitteleinspritzdüsen (4) umfasst, die zur Einspritzung von Schmiermittel in den Zylinder (1) an verschiedenen Positionen des Umfangs während Einspritzphasen entlang eines Umfangs des Zylinders (1) verteilt ist; wobei der Motor ferner ein Schmiersystem zum Bereitstellen von Schmiermittel an die Einspritzdüsen in den Einspritzphasen umfasst;
wobei das Schmiersystem vor einer Modifikation eine Schmiervorrichtung (11) umfasst, die mit jeder Einspritzdüse durch eine entsprechende Schmiermittelzufuhrrohrleitung (9) rohrverbunden ist, um in den Einspritzphasen jeder Einspritzdüse unter Druck stehendes Schmiermittel durch die entsprechende Schmiermittelzufuhrrohrleitung (9) bereitzustellen;
wobei die Schmiervorrichtung (11) von der Art ist, die ein Gehäuse (101) umfasst, in dem ein hydraulisch angetriebener Betätigungskolben (123) entlang einer Hublänge (112) hin- und hergehend angeordnet ist, wobei die Schmiervorrichtung (11) ferner einen Einstellmechanismus für die Hublänge (112) umfasst, der zum variablen Einstellen der Hublänge (112) des hin- und hergehenden hydraulisch angetriebenen Betätigungskolbens (123) nur zwischen einer minimalen Hublänge und einer maximalen Hublänge konfiguriert ist;
wobei die Schmiervorrichtung (11) ferner eine Vielzahl von Einspritzkolben umfasst, die gleitend in entsprechenden Dosierkanälen (115) angeordnet ist, wobei die Einspritzkolben an den Betätigungskolben (123) gekoppelt sind, um durch den Betätigungskolben (123) über die Hublänge (112) bewegt zu werden und damit Schmiermittel in den Dosierkanälen (115) über eine Dosierkanalstrecke unter Druck zu setzen, um das unter Druck stehende Schmiermittel zur Einspritzung des Schmiermittels in den Motorzylinder (1) aus dem Dosierkanal durch ein Rückschlagventil (102) und durch die Schmiermittelzufuhrrohrleitung (9) zu der Einspritzdüse (4) abzugeben; wobei die Dosierkanalentfernung das Schmiermittelvolumen definiert, das während der Einspritzphase aus dem Dosierkanal abgegeben wird; wobei die Dosierkanalentfernung durch Einstellen der Hublänge (112) zwischen der minimalen Hublänge und der maximalen Hublänge des Betätigungskolbens (123) zwischen einer minimalen Dosierkanalentfernung und einer maximalen Dosierkanalentfernung eingestellt werden kann;
wobei die Schmiervorrichtung (11) ein elektrisches Ventil (116) umfasst, das angeordnet ist, um ein Umschalten zwischen Hydraulikdruckpegeln zu bewirken, die auf den Betätigungskolben (123) wirken, um den Betätigungskolben (123) durch das Umschalten der Druckpegel hydraulisch hin- und hergehend anzutreiben;
wobei das Schmiersystem eine Steuerung (12) umfasst, die elektrisch mit dem elektrischen Ventil (116) verbunden ist, um die Taktung des Umschaltens für die Einspritzphasen durch entsprechende elektrische Signale zu steuern, die von der Steuerung (12) an das elektrische Ventil (116) übertragen werden;
wobei die Verbesserung durch Modifizieren des Schmiersystems Folgendes umfasst:
- Bereitstellen eines Schmiermittelakkumulators (21) zum Ansammeln von unter Druck stehendem Schmiermittel in dem Schmiermittelakkumulator (21), eines Aktualisierungsventilsystems (20) zum gesteuerten Schmiermittelfluss durch das Aktualisierungsventilsystem (20) und einer Aktualisierungssteuerung (19) zum Steuern eines Öffnens und Schließen des Aktualisierungsventilsystems (20),
- Abkoppeln der Schmiermittelzufuhrrohrleitungen (9) zwischen der Schmiervorrichtung (11) und den Einspritzdüsen (4) und stattdessen Rohrverbinden der Schmiervorrichtung (11) mit einer einzigen Versorgungsleitung (24) mit einer stromaufwärtigen Seite des Aktualisierungsventilsystems (20, 20'),
- funktionelles Verbinden der Aktualisierungssteuerung (19) mit dem Aktualisierungsventilsystem (20, 20') zum Steuern der Taktung, der Frequenz und der Zeitdauer für das Öffnen und Schließen des Aktualisierungsventilsystems (20, 20');
**dadurch gekennzeichnet, dass** das Verfahren Folgendes umfasst:
- Betreiben des Motors mit Schmierung von der Schmiervorrichtung (11) unter der Kontrolle der Steuerung (12) mit einer Einspritzung durch die Schmiermitteleinspritzdüsen (4) für jede erste Anzahl von Motorumdrehungen;
- Anhalten des Betriebs des Motors zur Modifizierung des Schmiersystems;
- Modifizieren des Schmiersystems;
- Fortsetzen des Betriebs des Motors mit dem modifizierten Schmiersystem;
wobei die Modifikation des Schmiersystems Rohrverbinden des Schmiermittelakkumulators (21) mit der einzigen Versorgungsleitung (24) auf einer stromaufwärtigen Seite des Aktualisierungsventilsystems (20, 20') in dem Strömungsweg zwischen der Schmiervorrichtung (11) und dem Aktualisierungsventilsystem (20, 20') zur Verwendung als Puffer für das Schmiermittel von der Schmiervorrichtung (11) und zum Aufnehmen von Druckvariationen in der einzigen Versorgungsleitung (24) durch die Pumpwirkung der Schmiervorrichtung (11) umfasst;
wobei der Betrieb des Motors mit dem modifizierten Schmiersystem umfasst, dass die Schmiervorrichtung (11) durch die Aktualisierungssteuerung (19), die das Aktualisierungsventilsystem (20, 20') in Bezug auf die Taktung und die Frequenz sowie die Zeitdauer des Schmiermittelflusses zum Einspritzen des Schmiermittels durch die Einspritzdüsen (4) in den Motorzylinder (1) unter der Kontrolle der Aktualisierungssteuerung (19) steuert, dazu veranlasst wird, unter Druck stehendes Schmiermittel in den Akkumulator (21) und zu dem Aktualisierungsventilsystem (20, 20') zu pumpen.

2. Verfahren nach Anspruch 1, wobei das Verfahren Ersetzen der Schmiermittelzufuhrrohrleitungen (9) von einer Gruppe von Einspritzdüsen (4) eines einzigen Motorzylinders (1) durch eine einzige gemeinsame Schmiermittelzufuhrleitung (9') zum Zuführen von Schmiermittel gleichzeitig zu allen Einspritzdüsen (4) der Gruppe von Einspritzdüsen (4) durch die gemeinsame Schmiermittelzufuhrleitung (9') umfasst.

3. Verfahren nach Anspruch 2, wobei das Verfahren Folgendes umfasst: Verbinden der Einspritzdüsen (4) mit einer stromabwärtigen Seite des Aktualisierungsventilsystems (20), um einen Schmiermittelfluss von der Schmiervorrichtung (11) zu der Gruppe von Einspritzdüsen (4) nur durch das Aktualisierungsventilsystem (20) und anschließend durch die einzige gemeinsame Schmiermittelzufuhrleitung (9') zu bewirken; Erhöhen des Drucks in der gemeinsamen Schmiermittelzufuhrleitung (9') während Einspritzphasen, aber nicht zwischen den Einspritzphasen, um allen Einspritzdüsen (4) in der Gruppe von Einspritzdüsen (4) in den Einspritzphasen durch die gemeinsame Schmiermittelzufuhrleitung (9') gleichzeitig unter Druck stehendes Schmiermittel zuzuführen.

4. Verfahren nach Anspruch 2, wobei das Verfahren Folgendes umfasst: Bereitstellen eines internen elektrisch aktivierten Ventils als Teil des Aktualisierungsventilsystems (20') an jede Einspritzdüse (4) in der Gruppe von Einspritzdüsen (4) und Verbinden der Gruppe von Einspritzdüsen (4) mit der gemeinsamen Schmiermittelzufuhrleitung (9'); Bereitstellen von unter Druck stehendem Schmiermittel in der gemeinsamen Schmiermittelzufuhrleitung (9') und Aktivieren der Ventile von jeder der Einspritzdüsen (4) unter der Kontrolle durch die Aktualisierungssteuerung (19).

5. Verfahren nach einem der vorangehenden Ansprüche, wobei das Verfahren elektronisches Verbinden der Steuerung (12) mit der Aktualisierungssteuerung (19) und Empfangen von Taktungssignalen von der Steuerung (12) durch die Aktualisierungssteuerung und Senden aktualisierter Aktivierungssignale zum Aktivieren des Aktualisierungsventilsystem (20, 20') in einer vorbestimmten Zeitabhängigkeit mit den Taktungssignalen an das Aktualisierungsventilsystem (20, 20) umfasst.

6. Verfahren nach einem der vorangehenden Ansprüche, wobei das Verfahren umfasst, die Steuerung (12) elektronisch dazu zu veranlassen, die Hublänge und/oder die Frequenz des Betätigungskolbens (123) der Schmiervorrichtung (11) zum Bereitstellen eines ausreichenden Schmiermittelvolumens, um auch das Schmiermittel in dem Akkumulator (21) unter Druck zu halten, zu erhöhen.

7. Verfahren nach einem der vorangehenden Ansprüche, wobei das Verfahren umfasst, die Steuerung (12) dazu zu veranlassen, die Pumpfrequenz der Schmiervorrichtung (12) zu erhöhen und dementsprechend die Frequenz des Aktualisierungsventilsystems (20) zu erhöhen und Schmiermittel mit einer höheren Einspritzfrequenz mit einer Einspritzphase für jede zweite Anzahl von Motorumdrehungen einzuspritzen, wobei die zweite Anzahl kleiner als die erste Anzahl ist.

8. Verfahren nach einem der vorangehenden Ansprüche, wobei die Schmiermitteleinspritzdüsen vor der Modifikation von der Art sind, die Ölfedern oder kompakte Schmiermittelstrahlen einspritzen; und wobei das Verfahren Austauschen der Schmiermitteleinspritzdüsen durch Einspritzdüsen (4) vom SIP-Typ und Fortsetzen des Betriebs des Motors mit Schmiermitteleinspritzung durch SIP-Einspritzdüsen (4) und Einspritzen eines Nebels zerstäubter Schmiermitteltröpfchen in den Spülluftwirbel innerhalb des Zylinders umfasst, wobei der Druck des Schmiermittels von den SIP-Einspritzdüsen im Bereich von 20 bis 120 bar liegt.

9. Verfahren zum Modifizieren eines Schmiermittelsystems zum Verbessern der Schmierung eines großen, langsam laufenden Motors, wobei der Motor von der Art ist, die einen Zylinder (1) mit einem hin- und hergehenden Kolben im Inneren und mit einer Vielzahl von Schmiermitteleinspritzdüsen (4) umfasst, die zur Einspritzung von Schmiermittel in den Zylinder (1) an verschiedenen Positionen des Umfangs während Einspritzphasen entlang eines Umfangs des Zylinders (1) verteilt ist; wobei das Schmiersystem zum Bereitstellen von Schmiermittel an die Einspritzdüsen in den Einspritzphasen konfiguriert ist;
wobei das Schmiersystem vor einer Modifikation eine Schmiervorrichtung (11) mit Rohrverbindungen (103) zum Rohrverbinden mit jeder Einspritzdüse (4) durch eine entsprechende Schmiermittelzufuhrrohrleitung (9) und zum Bereitstellen von unter Druck stehendes Schmiermittel durch die entsprechende Schmiermittelzufuhrrohrleitung (9) an jede Einspritzdüse (4) in den Einspritzphasen umfasst;
wobei die Schmiervorrichtung (11) von der Art ist, die ein Gehäuse (101) umfasst, in dem ein hydraulisch angetriebener Betätigungskolben (123) entlang einer Hublänge (112) hin- und hergehend angeordnet ist, wobei die Schmiervorrichtung (11) ferner einen Einstellmechanismus für die Hublänge (112) umfasst, der zum variablen Einstellen der Hublänge (112) des hin- und hergehenden hydraulisch angetriebenen Betätigungskolbens (123) zwischen einer minimalen Hublänge und einer maximalen Hublänge konfiguriert ist;
wobei die Schmiervorrichtung ferner eine Vielzahl von Einspritzkolben umfasst, die gleitend in entsprechenden Dosierkanälen (115) angeordnet ist, wobei die Einspritzkolben an den Betätigungskolben (123) gekoppelt sind, um durch den Betätigungskolben (123) über die Hublänge (112) bewegt zu werden und damit Schmiermittel in den Dosierkanälen (115) über eine Dosierkanalstrecke unter Druck zu setzen, um das unter Druck stehende Schmiermittel zur Einspritzung des Schmiermittels in den Motorzylinder (1) aus dem Dosierkanal durch ein Rückschlagventil (102) und durch die Zufuhrrohrleitungen (9) zu den Einspritzdüsen (4) abzugeben; wobei die Dosierkanalentfernung das Schmiermittelvolumen definiert, das während der Einspritzphase aus dem Dosierkanal abgegeben wird; wobei die Dosierkanalentfernung durch Einstellen der Hublänge (112) zwischen der minimalen Hublänge und der maximalen Hublänge des Betätigungskolbens (123) zwischen einer minimalen Dosierkanalentfernung und einer maximalen Dosierkanalentfernung eingestellt werden kann;
wobei die Schmiervorrichtung (11) ein elektrisches Ventil (116) umfasst, das angeordnet ist, um ein Umschalten zwischen Hydraulikdruckpegeln zu bewirken, die auf den Betätigungskolben (123) wirken, um den Betätigungskolben (123) durch das Umschalten der Druckpegel hydraulisch hin- und hergehend anzutreiben;
wobei das Schmiersystem eine Steuerung (12) umfasst, die elektrisch mit dem elektrischen Ventil (116) verbunden ist, um die Taktung des Umschaltens für die Einspritzphasen durch entsprechende elektrische Signale zu steuern, die von der Steuerung an das elektrische Ventil (116) übertragen werden; wobei die Modifikation des Schmiersystems Folgendes umfasst:
- Bereitstellen eines Schmiermittelakkumulators (21) zum Ansammeln von unter Druck stehendem Schmiermittel in dem Schmiermittelakkumulator (21), eines Aktualisierungsventilsystems (20) zum gesteuerten Schmiermittelfluss durch das Aktualisierungsventilsystem (20) und einer Aktualisierungssteuerung (19) zum Steuern eines Öffnens und Schließen des Aktualisierungsventilsystems (20),
- Abkoppeln der Schmiermittelzufuhrrohrleitungen (9) zwischen der Schmiervorrichtung (11) und den Einspritzdüsen (4) und stattdessen Rohrverbinden der Schmiervorrichtung (11) mit einer einzigen Versorgungsleitung (24) mit einer stromaufwärtigen Seite des Aktualisierungsventilsystems (20);
- funktionelles Verbinden der Aktualisierungssteuerung (19) mit dem Aktualisierungsventilsystem (20, 20') zum Steuern der Taktung, der Frequenz und der Zeitdauer für das Öffnen und Schließen des Aktualisierungsventilsystems (20, 20');
**dadurch gekennzeichnet, dass** die Modifikation des Schmiersystems ferner Rohrverbinden des Schmiermittelakkumulators (21) mit der einzigen Versorgungsleitung (24) auf einer stromaufwärtigen Seite des Aktualisierungsventilsystems (20, 20') in dem Strömungsweg zwischen der Schmiervorrichtung (11) und dem Aktualisierungsventilsystem (20, 20') zur Verwendung als Puffer für das Schmiermittel von der Schmiervorrichtung (11) und zum Aufnehmen von Druckvariationen in der einzigen Versorgungsleitung (24) durch die Pumpwirkung der Schmiervorrichtung (11) umfasst;
wobei das modifizierte Schmiersystem dazu konfiguriert ist, die Schmiervorrichtung (11) durch die Aktualisierungssteuerung (19), die das Aktualisierungsventilsystem (20, 20') in Bezug auf die Taktung und die Frequenz sowie die Zeitdauer des Schmiermittelflusses zum Einspritzen des Schmiermittels in den Motorzylinder (1) unter der Kontrolle der Aktualisierungssteuerung (19) steuert, dazu zu veranlassen, unter Druck stehendes Schmiermittel in den Akkumulator (21) und zu dem Aktualisierungsventilsystem (20, 20') zu pumpen.

10. Verfahren nach Anspruch 9, wobei das Verfahren Ersetzen der Schmiermittelzufuhrrohrleitungen (9) von einer Gruppe von Einspritzdüsen (4) eines einzigen Motorzylinders (1) durch eine einzige gemeinsame Schmiermittelzufuhrleitung (9') zum Zuführen umfasst Schmiermittel gleichzeitig zu allen Einspritzdüsen (4) der Gruppe von Einspritzdüsen (4) durch die gemeinsame Schmiermittelzufuhrleitung (9') umfasst.

11. Verfahren nach Anspruch 10, wobei das Verfahren Folgendes umfasst: Verbinden der Einspritzdüsen (4) mit einer stromabwärtigen Seite des Aktualisierungsventilsystems (20), um einen Schmiermittelfluss von der Schmiervorrichtung (11) zu der Gruppe von Einspritzdüsen (4) nur durch das Aktualisierungsventilsystem (20) und anschließend durch die einzige gemeinsame Schmiermittelzufuhrleitung (9') zu bewirken; Erhöhen des Drucks in der gemeinsamen Schmiermittelzufuhrleitung (9') während Einspritzphasen, aber nicht zwischen den Einspritzphasen, um allen Einspritzdüsen (4) in der Gruppe von Einspritzdüsen (4) in den Einspritzphasen durch die gemeinsame Schmiermittelzufuhrleitung (9') gleichzeitig unter Druck stehendes Schmiermittel zuzuführen.

12. Verfahren nach Anspruch 10, wobei das Verfahren Folgendes umfasst: Bereitstellen eines internen elektrisch aktivierten Ventils als Teil des Aktualisierungsventilsystems (20') an jede Einspritzdüse (4) in der Gruppe von Einspritzdüsen (4) und Verbinden der Gruppe von Einspritzdüsen (4) mit der gemeinsamen Schmiermittelzufuhrleitung (9'); Bereitstellen von unter Druck stehendem Schmiermittel in der gemeinsamen Schmiermittelzufuhrleitung (9') und Aktivieren der Ventile von jeder der Einspritzdüsen (4) unter der Kontrolle durch die Aktualisierungssteuerung (19).

13. Verfahren nach einem der Ansprüche 9-12, wobei das Verfahren elektronisches Verbinden der Steuerung (12) mit der Aktualisierungssteuerung (19) und Empfangen von Taktungssignalen von der Steuerung (12) durch die Aktualisierungssteuerung und Senden aktualisierter Aktivierungssignale zum Aktivieren des Aktualisierungsventilsystem (20, 20') in einer vorbestimmten Zeitabhängigkeit mit den Taktungssignalen an das Aktualisierungsventilsystem (20, 20) umfasst.

14. Verfahren nach einem der Ansprüche 9-13, wobei das Verfahren Austauschen der Schmiermitteleinspritzdüsen durch Einspritzdüsen (4) vom SIP-Typ und zum Fortsetzen des Betriebs des Motors mit Schmiermitteleinspritzung durch SIP-Einspritzdüsen und Einspritzen eines Nebels zerstäubter Schmiermitteltröpfchen in den Spülluftwirbel innerhalb des Zylinders umfasst, wobei der Druck des Schmiermittels von den SIP-Einspritzdüsen im Bereich von 20 bis 120 bar liegt.

15. Schmiersystem für einen großen, langsam laufenden Motor, der gemäß Anspruch 1 oder 10 modifiziert wurde, wobei der Motor von der Art ist, die einen Zylinder (1) mit einem hin- und hergehenden Kolben im Inneren und mit einer Vielzahl von Schmiermitteleinspritzdüsen (4) umfasst, die zur Einspritzung von Schmiermittel in den Zylinder (1) an verschiedenen Positionen des Umfangs während der Einspritzphasen entlang eines Umfangs des Zylinders (1) verteilt ist; wobei das Schmiersystem zum Bereitstellen von Schmiermittel an die Einspritzdüsen in den Einspritzphasen konfiguriert ist;
wobei das Schmiersystem eine Schmiervorrichtung (11) mit einer Rohrverbindung mit den Einspritzdüsen (4) zum Bereitstellen von unter Druck stehendem Schmiermittel an die Einspritzdüsen (4) in den Einspritzphasen umfasst;
wobei die Schmiervorrichtung (11) ein Gehäuse (101) umfasst, in dem ein hydraulisch angetriebener Betätigungskolben (123) entlang einer Hublänge (112) hin- und hergehend angeordnet ist, wobei die Schmiervorrichtung (11) ferner einen Einstellmechanismus für die Hublänge (112) umfasst, der zum variablen Einstellen der Hublänge (112) des hin- und hergehenden hydraulisch angetriebenen Betätigungskolbens (123) zwischen einer minimalen Hublänge und einer maximalen Hublänge konfiguriert ist;
wobei die Schmiervorrichtung (11) ferner eine Vielzahl von Einspritzkolben umfasst, die gleitend in entsprechenden Dosierkanälen (115) angeordnet ist, wobei die Einspritzkolben an den Betätigungskolben (123) gekoppelt sind, um durch den Betätigungskolben (123) über die Hublänge (112) bewegt zu werden und damit Schmiermittel in den Dosierkanälen (115) über eine Dosierkanalstrecke unter Druck zu setzen, um das unter Druck stehende Schmiermittel zur Einspritzung des Schmiermittels in den Motorzylinder (1) aus dem Dosierkanal durch ein Rückschlagventil (102) und zu den Einspritzdüsen (4) abzugeben; wobei die Dosierkanalentfernung das Schmiermittelvolumen definiert, das während der Einspritzphase aus dem Dosierkanal abgegeben wird; wobei die Dosierkanalentfernung zwischen einer minimalen Dosierkanalentfernung und einer maximalen Dosierkanalentfernung einer Schmiervorrichtung vor der Modifizierung eingestellt werden kann und durch Einstellen der Hublänge (112) zwischen der minimalen Hublänge und der maximalen Hublänge des Betätigungskolbens (123) eingerichtet wird;
wobei die Schmiervorrichtung (11) ein elektrisches Ventil (116) umfasst, das angeordnet ist, um ein Umschalten zwischen Hydraulikdruckpegeln zu bewirken, die auf den Betätigungskolben (123) wirken, um den Betätigungskolben (123) durch das Umschalten der Druckpegel hydraulisch hin- und hergehend anzutreiben;
wobei das Schmiersystem eine Steuerung (12) umfasst, die elektrisch mit dem elektrischen Ventil (116) verbunden ist, um die Taktung des Umschaltens für die Einspritzphasen durch entsprechende elektrische Signale zu steuern, die von der Steuerung an das elektrische Ventil (116) übertragen werden; wobei das Schmiersystem einen Schmiermittelakkumulator (21) zum Ansammeln von unter Druck stehendem Schmiermittel in dem Schmiermittelakkumulator (21), ein Aktualisierungsventilsystem (20) zum gesteuerten Schmiermittelfluss durch das Aktualisierungsventilsystem (20) und eine Aktualisierungssteuerung (19) zum Steuern eines Öffnens und Schließen des Aktualisierungsventilsystems (20) umfasst,
wobei die Schmiervorrichtung (11) mit einer einzigen Versorgungsleitung (24) auf einer stromaufwärtigen Seite des Aktualisierungsventilsystems (20) verbunden ist;
wobei die Aktualisierungssteuerung (19) zum Steuern der Taktung, der Frequenz und der Zeitdauer für das Öffnen und Schließen des Aktualisierungsventilsystems (20, 20') funktionell mit dem Aktualisierungsventilsystem (20, 20') verbunden ist;
**dadurch gekennzeichnet, dass** der Schmiermittelakkumulator (21) in dem Strömungsweg zwischen der Schmiervorrichtung (11) und dem Aktualisierungsventilsystem (20, 20') zur Verwendung als Puffer für das Schmiermittel von der Schmiervorrichtung (11) und zum Aufnehmen von Druckvariationen in der einzigen Versorgungsleitung (24) durch die Pumpwirkung der Schmiervorrichtung (11) auf einer stromaufwärtigen Seite des Aktualisierungsventilsystems (20, 20') mit der einzigen Versorgungsleitung (24) rohrverbunden ist;
wobei das Schmiersystem dazu konfiguriert ist, die Schmiervorrichtung (12) durch die Aktualisierungssteuerung (19), die das Aktualisierungsventilsystem (20, 20') in Bezug auf die Taktung und die Frequenz sowie die Dauer des Schmiermittelflusses zum Einspritzen des Schmiermittels in den Motorzylinder (1) unter der Kontrolle der Aktualisierungssteuerung (19) steuert, dazu zu veranlassen, unter Druck stehendes Schmiermittel in den Akkumulator (21) und zu dem Aktualisierungsventilsystem (20, 20') zu pumpen.

## Revendications

1. Procédé d'amélioration de la lubrification d'un gros moteur à régime lent, le moteur comprenant un cylindre (1) avec un piston alternatif à l'intérieur et avec une pluralité d'injecteurs de lubrifiant (4) répartis le long d'un périmètre du cylindre (1) pour l'injection de lubrifiant dans le cylindre (1) à diverses positions sur le périmètre pendant les phases d'injection ; le moteur comprenant en outre un système de lubrification pour fournir du lubrifiant aux injecteurs dans les phases d'injection ;
dans lequel le système de lubrification avant modification comprend un lubrificateur (11) connecté par tuyau à chaque injecteur par un conduit d'alimentation en lubrifiant correspondant (9) pour fournir du lubrifiant sous pression à chaque injecteur à travers le conduit d'alimentation en lubrifiant correspondant (9) dans les phases d'injection ;
dans lequel le lubrificateur (11) est du type qui comprend un boîtier (101) dans lequel un piston actionneur à entraînement hydraulique (123) est agencé en va-et-vient le long d'une longueur de course (112), dans lequel le lubrificateur (11) comprend en outre un mécanisme de réglage de longueur de course (112) configuré pour régler de manière variable la longueur de course (112) du piston actionneur à entraînement hydraulique alternatif (123) uniquement entre une longueur de course minimale et une longueur de course maximale ;
dans lequel le lubrificateur (11) comprend en outre une pluralité de plongeurs d'injection agencés de manière coulissante dans des canaux de dosage correspondants (115), dans lequel les plongeurs d'injection sont couplés au piston actionneur (123) afin d'être déplacés par le piston actionneur (123) sur la longueur de course (112) et en conséquence mettre sous pression le lubrifiant dans les canaux de dosage (115) sur une distance de canal de dosage pour expulser le lubrifiant sous pression du canal de dosage à travers un clapet anti-retour (102) et à travers le conduit d'alimentation en lubrifiant (9) vers l'injecteur (4) pour l'injection du lubrifiant dans le cylindre de moteur (1) ; dans lequel la distance de canal de dosage définit le volume de lubrifiant expulsé du canal de dosage pendant la phase d'injection ; dans lequel la distance de canal de dosage est réglable entre une distance de canal de dosage minimale et une distance de canal de dosage maximale en réglant la longueur de course (112) entre la longueur de course minimale et la longueur de course maximale du piston actionneur (123) ; dans lequel le lubrificateur (11) comprend une vanne électrique (116) agencée pour entraîner une commutation entre des niveaux de pression hydraulique agissant sur le piston actionneur (123) pour entraîner hydrauliquement le piston actionneur (123) selon un mouvement alternatif par les niveaux de pression de commutation ;
dans lequel le système de lubrification comprend un dispositif de commande (12) connecté électriquement à la vanne électrique (116) pour commander la temporisation de la commutation pour les phases d'injection par des signaux électriques correspondants transmis du dispositif de commande (12) à la vanne électrique (116) ;
dans lequel l'amélioration par modification du système de lubrification comprend
- la fourniture d'un accumulateur de lubrifiant (21) pour accumuler du lubrifiant sous pression dans l'accumulateur de lubrifiant (21), d'un système de vanne de mise à niveau (20) pour un écoulement commandé de lubrifiant à travers le système de vanne de mise à niveau (20), et d'un dispositif de commande de mise à niveau (19) pour commander l'ouverture et la fermeture du système de vanne de mise à niveau (20),
- le découplage des conduits d'alimentation en lubrifiant (9) entre le lubrificateur (11) et les injecteurs (4) et à la place une connexion de tuyau du lubrificateur (11) avec une conduite d'alimentation unique (24) à un côté amont du système de vanne de mise à niveau (20, 20'),
- la connexion fonctionnelle du dispositif de commande de mise à niveau (19) au système de vanne de mise à niveau (20, 20') pour commander la temporisation, la fréquence et la durée, pour l'ouverture et la fermeture du système de vanne de mise à niveau (20, 20') ;
**caractérisé en ce que** le procédé comprend
- le fonctionnement du moteur avec lubrification à partir du lubrificateur (11) sous la commande du dispositif de commande (12) avec une injection à travers les injecteurs de lubrifiant (4) pour chaque premier nombre de tours moteur ;
- l'arrêt du fonctionnement du moteur pour la modification du système de lubrification ;
- la modification du système de lubrification ;
- le fonctionnement continu du moteur avec le système de lubrification modifié ;
dans lequel la modification du système de lubrification comprend une connexion de tuyau de l'accumulateur de lubrifiant (21) à la conduite d'alimentation unique (24) au niveau d'un côté amont du système de vanne de mise à niveau (20.20') dans le trajet d'écoulement entre le lubrificateur (11) et le système de vanne de mise à niveau (20, 20') pour une utilisation en tant que tampon pour le lubrifiant provenant du lubrificateur (11) et pour absorber des variations de pression dans la conduite d'alimentation unique (24) à partir de l'action de pompage du lubrificateur (11) ;
dans lequel le fonctionnement du moteur avec le système de lubrification modifié comprend le fait d'amener le lubrificateur (11) à pomper du lubrifiant sous pression dans l'accumulateur (21) et vers le système de vanne de mise à niveau (20, 20'), par le dispositif de commande de mise à niveau (19) commandant le système de vanne de mise à niveau (20, 20') par rapport à la temporisation et à la fréquence ainsi qu'à la durée de l'écoulement de lubrifiant pour injecter le lubrifiant par les injecteurs (4) dans le cylindre de moteur (1) sous la commande du dispositif de commande de mise à niveau (19) .

2. Procédé selon la revendication 1, dans lequel le procédé comprend la substitution des conduits d'alimentation en lubrifiant (9) d'un groupe d'injecteurs (4) d'un cylindre de moteur unique (1) par une conduite d'alimentation en lubrifiant commune unique (9') pour alimenter en lubrifiant simultanément tous les injecteurs (4) du groupe d'injecteurs (4) à travers la conduite d'alimentation en lubrifiant commune (9').

3. Procédé selon la revendication 2, dans lequel le procédé comprend la connexion des injecteurs (4) à un côté aval du système de vanne de mise à niveau (20) pour entraîner un écoulement de lubrifiant du lubrificateur (11) vers le groupe d'injecteurs (4) uniquement à travers le système de vanne de mise à niveau (20) et ensuite à travers la conduite d'alimentation en lubrifiant commune unique (9') ; l'augmentation de la pression dans la conduite d'alimentation en lubrifiant commune (9') pendant les phases d'injection mais pas entre les phases d'injection pour alimenter en lubrifiant sous pression simultanément tous les injecteurs (4) du groupe d'injecteurs (4) à travers la conduite d'alimentation en lubrifiant commune (9') dans les phases d'injection.

4. Procédé selon la revendication 2, dans lequel le procédé comprend la fourniture à chaque injecteur (4) du groupe d'injecteurs (4) d'une vanne interne activée électriquement faisant partie du système de vanne de mise à niveau (20') et la connexion du groupe d'injecteurs (4) à la conduite d'alimentation en lubrifiant commune (9') ; la fourniture de lubrifiant sous pression dans la conduite d'alimentation en lubrifiant commune (9') et l'activation des vannes de chacun des injecteurs (4) sous la commande du dispositif de commande de mise à niveau (19).

5. Procédé selon l'une quelconque des revendications précédentes, dans lequel le procédé comprend la connexion électronique du dispositif de commande (12) au dispositif de commande de mise à niveau (19) et par le dispositif de commande de mise à niveau la réception de signaux de temporisation du dispositif de commande (12) et l'envoi de signaux d'activation mis à niveau au système de vanne de mise à niveau (20, 20') pour activer le système de vanne de mise à niveau (20, 20') dans une dépendance temporelle prédéterminée avec les signaux de temporisation.

6. Procédé selon l'une quelconque des revendications précédentes, dans lequel le procédé comprend le fait d'amener électroniquement le dispositif de commande (12) à augmenter la longueur de course et/ou la fréquence du piston actionneur (123) du lubrificateur (11) pour fournir un volume de lubrifiant suffisant pour maintenir également le lubrifiant dans l'accumulateur (21) sous pression.

7. Procédé selon l'une quelconque des revendications précédentes, dans lequel le procédé comprend le fait d'amener le dispositif de commande (12) à augmenter la fréquence de pompage du lubrificateur (12) et l'augmentation en conséquence de la fréquence du système de vanne de mise à niveau (20) et l'injection de lubrifiant à une fréquence d'injection plus élevée avec une phase d'injection pour chaque second nombre de tours moteur, dans lequel le second nombre est inférieur au premier nombre.

8. Procédé selon l'une quelconque des revendications précédentes, dans lequel les injecteurs de lubrifiant avant modification sont du type qui injectent des canules d'huile ou des jets de lubrifiant compacts ; et dans lequel le procédé comprend l'échange des injecteurs de lubrifiant par des injecteurs de type SIP (4) et la poursuite du fonctionnement du moteur avec injection de lubrifiant par des injecteurs SIP (4) et l'injection d'un brouillard de gouttelettes atomisées de lubrifiant dans le tourbillonnement d'air de balayage à l'intérieur du cylindre, dans lequel la pression du lubrifiant des injecteurs SIP est dans l'intervalle de 20 à 120 bar.

9. Procédé de modification d'un système de lubrification pour améliorer la lubrification d'un gros moteur à régime lent, dans lequel le moteur est du type comprenant un cylindre (1) avec un piston alternatif à l'intérieur et avec une pluralité d'injecteurs de lubrifiant (4) répartis le long d'un périmètre du cylindre (1) pour l'injection de lubrifiant dans le cylindre (1) à diverses positions sur le périmètre pendant les phases d'injection ; dans lequel le système de lubrification est configuré pour fournir du lubrifiant aux injecteurs dans les phases d'injection ;
dans lequel le système de lubrification avant modification comprend un lubrificateur (11) avec des connexions de tuyau (103) pour être connecté par tuyau à chaque injecteur (4) par un conduit d'alimentation en lubrifiant correspondant (9) et pour fournir du lubrifiant sous pression à chaque injecteur (4) à travers le conduit d'alimentation en lubrifiant correspondant (9) dans les phases d'injection ;
dans lequel le lubrificateur (11) est du type qui comprend un boîtier (101) dans lequel un piston actionneur à entraînement hydraulique (123) est agencé en va-et-vient le long d'une longueur de course (112), dans lequel le lubrificateur (11) comprend en outre un mécanisme de réglage de longueur de course (112) configuré pour régler de manière variable la longueur de course (112) du piston actionneur à entraînement hydraulique alternatif (123) entre une longueur de course minimale et une longueur de course maximale ;
dans lequel le lubrificateur comprend en outre une pluralité de plongeurs d'injection agencés de manière coulissante dans des canaux de dosage correspondants (115), dans lequel les plongeurs d'injection sont couplés au piston actionneur (123) afin d'être déplacés par le piston actionneur (123) sur la longueur de course (112) et en conséquence mettre sous pression le lubrifiant dans les canaux de dosage (115) sur une distance de canal de dosage pour expulser le lubrifiant sous pression du canal de dosage à travers un clapet anti-retour (102) et à travers les conduits d'alimentation (9) vers les injecteurs (4) pour l'injection du lubrifiant dans le cylindre de moteur (1) ; dans lequel la distance de canal de dosage définit le volume de lubrifiant expulsé du canal de dosage pendant la phase d'injection ; dans lequel la distance de canal de dosage est réglable entre une distance de canal de dosage minimale et une distance de canal de dosage maximale en réglant la longueur de course (112) entre la longueur de course minimale et la longueur de course maximale du piston actionneur (123) ;
dans lequel le lubrificateur (11) comprend une vanne électrique (116) agencée pour entraîner une commutation entre des niveaux de pression hydraulique agissant sur le piston actionneur (123) pour entraîner hydrauliquement le piston actionneur (123) selon un mouvement alternatif par les niveaux de pression de commutation ;
dans lequel le système de lubrification comprend un dispositif de commande (12) connecté électriquement à la vanne électrique (116) pour commander la temporisation de la commutation pour les phases d'injection par des signaux électriques correspondants transmis du dispositif de commande à la vanne électrique (116) ;
dans lequel la modification du système de lubrification comprend
- la fourniture d'un accumulateur de lubrifiant (21) pour accumuler du lubrifiant sous pression dans l'accumulateur de lubrifiant (21), d'un système de vanne de mise à niveau (20) pour un écoulement commandé de lubrifiant à travers le système de vanne de mise à niveau (20), et d'un dispositif de commande de mise à niveau (19) pour commander l'ouverture et la fermeture du système de vanne de mise à niveau (20),
- le découplage des conduits d'alimentation en lubrifiant (9) entre le lubrificateur (11) et les injecteurs (4) et à la place une connexion de tuyau du lubrificateur (11) avec une conduite d'alimentation unique (24) à un côté amont du système de vanne de mise à niveau (20) ;
- la connexion fonctionnelle du dispositif de commande de mise à niveau (19) au système de vanne de mise à niveau (20, 20') pour commander la temporisation, la fréquence et la durée, pour l'ouverture et la fermeture du système de vanne de mise à niveau (20, 20') ;
**caractérisé en ce que** la modification du système de lubrification comprend en outre une connexion de tuyau de l'accumulateur de lubrifiant (21) à la conduite d'alimentation unique (24) au niveau d'un côté amont du système de vanne de mise à niveau (20.20') dans le trajet d'écoulement entre le lubrificateur (11) et le système de vanne de mise à niveau (20, 20') pour une utilisation en tant que tampon pour le lubrifiant provenant du lubrificateur (11) et pour absorber des variations de pression dans la conduite d'alimentation unique (24) à partir de l'action de pompage du lubrificateur (11) ;
dans lequel le système de lubrification modifié est configuré pour amener le lubrificateur (11) à pomper du lubrifiant sous pression dans l'accumulateur (21) et vers le système de vanne de mise à niveau (20, 20'), par le dispositif de commande de mise à niveau (19) commandant le système de vanne de mise à niveau (20, 20') par rapport à la temporisation et à la fréquence ainsi qu'à la durée de l'écoulement de lubrifiant pour injecter le lubrifiant dans le cylindre de moteur (1) sous la commande du dispositif de commande de mise à niveau (19).

10. Procédé selon la revendication 9, dans lequel le procédé comprend la substitution des conduits d'alimentation en lubrifiant (9) d'un groupe d'injecteurs (4) d'un cylindre de moteur unique (1) par une conduite d'alimentation en lubrifiant commune unique (9') pour alimenter en lubrifiant simultanément tous les injecteurs (4) du groupe d'injecteurs (4) à travers la conduite d'alimentation en lubrifiant commune (9').

11. Procédé selon la revendication 10, dans lequel le procédé comprend la connexion des injecteurs (4) à un côté aval du système de vanne de mise à niveau (20) pour entraîner un écoulement de lubrifiant du lubrificateur (11) vers le groupe d'injecteurs (4) uniquement à travers le système de vanne de mise à niveau (20) et ensuite à travers la conduite d'alimentation en lubrifiant commune unique (9') ; l'augmentation de la pression dans la conduite d'alimentation en lubrifiant commune (9') pendant les phases d'injection mais pas entre les phases d'injection pour alimenter en lubrifiant sous pression simultanément tous les injecteurs (4) du groupe d'injecteurs (4) à travers la conduite d'alimentation en lubrifiant commune (9') dans les phases d'injection.

12. Procédé selon la revendication 10, dans lequel le procédé comprend la fourniture à chaque injecteur (4) du groupe d'injecteurs (4) d'une vanne interne activée électriquement faisant partie du système de vanne de mise à niveau (20') et la connexion du groupe d'injecteurs (4) à la conduite d'alimentation en lubrifiant commune (9') ; la fourniture de lubrifiant sous pression dans la conduite d'alimentation en lubrifiant commune (9') et l'activation des vannes de chacun des injecteurs (4) sous la commande du dispositif de commande de mise à niveau (19).

13. Procédé selon l'une quelconque des revendications 9 à 12, dans lequel le procédé comprend la connexion électronique du dispositif de commande (12) au dispositif de commande de mise à niveau (19) et par le dispositif de commande de mise à niveau la réception de signaux de temporisation du dispositif de commande (12) et l'envoi de signaux d'activation mis à niveau au système de vanne de mise à niveau (20, 20) pour activer le système de vanne de mise à niveau (20, 20') dans une dépendance temporelle prédéterminée avec les signaux de temporisation.

14. Procédé selon l'une quelconque des revendications 9 à 13, dans lequel le procédé comprend l'échange des injecteurs de lubrifiant par des injecteurs de type SIP (4) pour poursuivre le fonctionnement du moteur avec injection de lubrifiant par des injecteurs SIP et injecter un brouillard de gouttelettes atomisées de lubrifiant dans le tourbillonnement d'air de balayage à l'intérieur du cylindre, dans lequel la pression du lubrifiant provenant des injecteurs SIP est dans l'intervalle de 20 à 120 bar.

15. Système de lubrification pour un gros moteur à régime lent qui a été modifié selon la revendication 1 ou 10, dans lequel le moteur est du type comprenant un cylindre (1) avec un piston alternatif à l'intérieur et avec une pluralité d'injecteurs de lubrifiant (4) répartis le long d'un périmètre du cylindre (1) pour l'injection de lubrifiant dans le cylindre (1) à diverses positions sur le périmètre pendant les phases d'injection ; dans lequel le système de lubrification est configuré pour fournir du lubrifiant aux injecteurs dans les phases d'injection ;
dans lequel le système de lubrification comprend un lubrificateur (11) avec une connexion de tuyau aux injecteurs (4) pour fournir du lubrifiant sous pression aux injecteurs (4) dans les phases d'injection ;
dans lequel le lubrificateur (11) comprend un boîtier (101) dans lequel un piston actionneur à entraînement hydraulique (123) est agencé en va-et-vient le long d'une longueur de course (112), dans lequel le lubrificateur (11) comprend en outre un mécanisme de réglage de longueur de course (112) configuré pour régler de manière variable la longueur de course (112) du piston actionneur à entraînement hydraulique alternatif (123) entre une longueur de course minimale et une longueur de course maximale ;
dans lequel le lubrificateur (11) comprend en outre une pluralité de plongeurs d'injection agencés de manière coulissante dans des canaux de dosage correspondants (115), dans lequel les plongeurs d'injection sont couplés au piston actionneur (123) afin d'être déplacés par le piston actionneur (123) sur la longueur de course (112) et en conséquence mettre sous pression le lubrifiant dans les canaux de dosage (115) sur une distance de canal de dosage pour expulser le lubrifiant sous pression du canal de dosage à travers un clapet anti-retour (102) et vers les injecteurs (4) pour l'injection du lubrifiant dans le cylindre de moteur (1) ; dans lequel la distance de canal de dosage définit le volume de lubrifiant expulsé du canal de dosage pendant la phase d'injection ; dans lequel la distance de canal de dosage est réglable entre une distance de canal de dosage minimale et une distance de canal de dosage maximale d'un lubrificateur avant modification et qui est établie en réglant la longueur de course (112) entre la longueur de course minimale et la longueur de course maximale du piston actionneur (123) ;
dans lequel le lubrificateur (11) comprend une vanne électrique (116) agencée pour entraîner une commutation entre des niveaux de pression hydraulique agissant sur le piston actionneur (123) pour entraîner hydrauliquement le piston actionneur (123) selon un mouvement alternatif par les niveaux de pression de commutation ;
dans lequel le système de lubrification comprend un dispositif de commande (12) connecté électriquement à la vanne électrique (116) pour commander la temporisation de la commutation pour les phases d'injection par des signaux électriques correspondants transmis du dispositif de commande à la vanne électrique (116) ;
dans lequel le système de lubrification comprend un accumulateur de lubrifiant (21) pour accumuler du lubrifiant sous pression dans l'accumulateur de lubrifiant (21), un système de vanne de mise à niveau (20) pour un écoulement commandé de lubrifiant à travers le système de vanne de mise à niveau (20), et un dispositif de commande de mise à niveau (19) pour commander l'ouverture et la fermeture du système de vanne de mise à niveau (20),
dans lequel le lubrificateur (11) est connecté à une conduite d'alimentation unique (24) à un côté amont du système de vanne de mise à niveau (20) ;
dans lequel le dispositif de commande de mise à niveau (19) est connecté de manière fonctionnelle au système de vanne de mise à niveau (20, 20') pour commander la temporisation, la fréquence et la durée, pour l'ouverture et la fermeture du système de vanne de mise à niveau (20, 20') ;
**caractérisé en ce que** l'accumulateur de lubrifiant (21) est connecté par tuyau à la conduite d'alimentation unique (24) au niveau d'un côté amont du système de vanne de mise à niveau (20, 20') dans le trajet d'écoulement entre le lubrificateur (11) et le système de vanne de mise à niveau (20, 20') pour une utilisation en tant que tampon pour le lubrifiant provenant du lubrificateur (11) et pour absorber des variations de pression dans la conduite d'alimentation unique (24) à partir de l'action de pompage du lubrificateur (11) ;
dans lequel le système de lubrification est configuré pour amener le lubrificateur (12) à pomper du lubrifiant sous pression dans l'accumulateur (21) et vers le système de vanne de mise à niveau (20, 20'), par le dispositif de commande de mise à niveau (19) commandant le système de vanne de mise à niveau (20, 20') par rapport à la temporisation et à la fréquence ainsi qu'à la longueur de l'écoulement de lubrifiant pour injecter le lubrifiant dans le cylindre de moteur (1) sous la commande du dispositif de commande de mise à niveau (19).
